(19) Europäisches Patentamt
European Patent Office
Office européen des brevets

(11) **EP 2 246 781 B1**

(12) **EUROPEAN PATENT SPECIFICATION**

(45) Date of publication and mention
of the grant of the patent:
**09.12.2020 Bulletin 2020/50**

(51) Int Cl.:
***G06F 7/00*** *(2006.01)*  ***G06F 15/78*** *(2006.01)*

(86) International application number:
**PCT/JP2009/051491**

(21) Application number: **09707098.1**

(22) Date of filing: **29.01.2009**

(87) International publication number:
**WO 2009/096482 (06.08.2009 Gazette 2009/32)**

(54) **RECONFIGURABLE DEVICE**

UMKONFIGURIERBARE EINRICHTUNG

DISPOSITIF RECONFIGURABLE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **31.01.2008 JP 2008021546**

(43) Date of publication of application:
**03.11.2010 Bulletin 2010/44**

(73) Proprietor: **Fuji Xerox Co., Ltd.
Tokyo 107-0052 (JP)**

(72) Inventor: **MATSUNO, Hiroyuki
Tokyo 100-0005 (JP)**

(74) Representative: **Körber, Martin Hans
Mitscherlich PartmbB
Patent- und Rechtsanwälte
Sonnenstrasse 33
80331 München (DE)**

(56) References cited:
**WO-A2-2005/066832  JP-A- 2007 128 124
US-A- 5 742 180  US-A1- 2004 030 815
US-B1- 7 257 795**

• **PACT INFORMATIONSTECHNOLOGIE GMBH:
"THE XPP WHITE PAPER - RELEASE 2.1",
INTERNET CITATION, 2002, XP002345999,
Retrieved from the Internet:
URL:http://www.pactcorp.com/xneu/download/
xpp_white_paper.pdf [retrieved on 2005-09-21]**
• **RITTER C ET AL: "Acceleration of MPEG-4 video
applications with the reconfigurable HW
processor XPP", VISUAL COMMUNICATIONS
AND IMAGE PROCESSING; 8-7-2003 - 11-7-2003;
LUGANO,, 8 July 2003 (2003-07-08),
XP030080728,**

## Description

TECHNICAL FIELD

The present invention relates to a device in which circuits can be reconfigured.

BACKGROUND ART

International Patent Application WO2003/023602 discloses a data processing system that includes a plurality of processing units and is also equipped with first, second, and third data transferring means. The first data transferring means connects a plurality of processing units in a network and carries out handovers of first data. By connecting two or more of the processing units out of the plurality of processing units, at least one reconfigurable data flow is constructed. The second data transferring means supplies control information for loading setting data and other control information in parallel to a plurality of processing units as second data. The third data transferring means supplies setting data to individual units out of the plurality of processing units. The setting data includes data that configures different functional data flow by changing, directly or indirectly, other processing units that are connected by the first data transfer means to a processing unit and/or changing the processing content of the processing unit itself.

Pact Informationstechnologie GmbH: "The XPP White Paper", Release 2.1, March 27, 2002 discloses a reconfigurable array of processing elements that are connected to each other by a packet-oriented communication system and which are divided into a plurality of segments or Processing array elements (PAE) containing objects, which are connected within the PAE by horizontal busses, while configurable switch-objects outside the PAE are used for segmenting the communication lines horizontally.

US 5 742 180 A discloses an integrated dynamically programmable gate array comprising a two dimensional array of programmable gates. These gates can be implemented as look up tables but hardwired gates with programmable interconnections are also possible. Each one of the gates receives plural input logic signals from plural other gates. Consequently, a broad range of logic combinations are possible. The gates further include locally stored multiple contexts dictating different combinatorial logic operations performed by the gates. A context signal generator is included that generates a context signal indicating a change in an active one of the contexts. This active context dictates the logic operations of the gates. Since the contexts information is stored on the gate array, and specifically locally, the context signal can change as fast as every clock cycle of the programmable gate array.

The above publication discloses that, by broadcasting the control information with information of identifying a data flow, control of a data flow that is configured by a plurality of processing units (elements) is performed. When the number of processing units that can be used to reconfigure a data flow is several hundred or more, if control information or the like for temporarily stopping a data flow does not reach the respective processing units at the same timing, it will be difficult to temporarily stop the data flow without destroying the data being processed by the data flow or the processing state of the data flow.

SUMMARY OF THE INVENTION

The present invention is defined by a device according to independent claim 1. Additional features of the invention are provided in the dependent claims.

In the following, parts of the description and drawings referring to embodiments which are not covered by the claims are not presented as embodiments of the invention, but as examples useful for understanding the invention.

One aspect of the present invention is a device including a reconfigurable section that comprises a plurality of processing elements and a routing matrix for connecting the plurality of processing elements. In the reconfigurable section, a data flow is reconfigured using at least some of the plurality of processing elements and at least part of the routing matrix. A data flow is reconfigured typically by changing a function of the respective processing elements out of the plurality of processing elements and/or by changing at least a part of connection of the routing matrix.

The plurality of processing elements of the device are arranged or laid out so as to be divided into a plurality of segments. In addition, the routing matrix includes a first level routing matrix that connects processing elements included in the respective segments (in each segment) within the range of a first delay and a second level routing matrix that connects processing elements included in different segments with a delay that differs to the first delay. This device also includes a command transmitting system that transmits commands to the respective processing elements in the plurality of processing elements included in the reconfigurable section.

The command transmitting system includes a transmission command register (register unit) that is separately provided in each segment, a first level command transmitting matrix that connects the transmission command register and the processing elements in each segment within the range of the first delay, and a second level command transmitting matrix that connects the transmission command registers of the plurality of segments and, with a delay that differs to the first delay, a command outputting unit that outputs the command. The command register typically includes a multi-bit flip-flop or a latch unit, is capable of inputting and outputting commands in clock cycle units, and can be used to transmit commands in synchronization with clock cycles.

In this device, the plurality of processing elements are laid out or placed dividedly into a plurality of segments. In each segment, processing elements are connected by the first level routing matrix within the range of the first delay (the first delay time, the first cycle, or the first latency), for example, one clock cycle that is the minimum time interval for operations by the processing elements. Accordingly, by providing the transmission command register and the first level command transmitting matrix separately for each segment, it becomes possible to transmit a command from the transmission command register to all of the processing elements inside a segment within the first delay, for example, one clock cycle. This means that if a command is transmitted from the command outputting unit in the range of a predetermined delay (delay time, latency), for example, one clock cycle, to the command registers of a plurality of segments using the second level command transmitting matrix, it will be possible to control all of the processing elements included in the reconfigurable section in synchronization (i.e., with the same timing) using a command outputted from the command outputting unit.

With this command transmitting system, a command is transmitted from the command outputting unit to each processing element after a predetermined (fixed) delay. Accordingly, although at least a few clock cycles will be consumed to transmit a command, it is possible to unambiguously set the number of clock cycles (i.e., latency) required to transmit the command. This means that it is possible to transmit a command synchronously to all of the processing elements included in the reconfigurable section, not just the processing elements in each respective section. Accordingly, even when a data flow is configured from a large number of processing elements, by outputting commands with consideration to the predetermined latency, it is possible to temporarily stop (halt) and reactivate (resume) the large number of processing elements that construct the data flow in synchronization.

The commands may be supplied from a processor that is inside or outside the device that controls the data flow. Commands such as requiring quick reaction, may be generated and outputted by at least part of processing elements (a group of processing elements) out of the plurality of processing elements. Such at least some out of the plurality of processing elements (the at least part of processing element) should preferably include a command generating unit. A typical example of a processing element that generates and outputs a command is an output interface element that includes a storage unit for temporarily storing an output processed by the data flow configured in the reconfigurable section. When such output interface element is unable to absorb a difference in processing speed between data input and output for a storage unit (buffer), it is possible to output a stop command via the command transmitting system to temporarily stop the data flow that is configured in the reconfigurable section. That is, a typical command transmitted by the command transmitting system is a stop command for stopping a clock of the processing elements.

The device further includes a command collecting system that collects commands generated by the command generating units into the command outputting unit. The command collecting system includes a collection command register provided separately in each segment and also includes a first level command collecting matrix that connects the collection command register and the at least part of the processing elements in each segment within the range of the first delay. The command collecting system further includes a second level command collecting matrix that connects the collection command registers of a plurality of segments and the command outputting unit with a delay that differs to the first delay.

By providing the collection command registers and the first level command collecting matrix in each segment, it is possible to collect commands into the collection command register from all of the processing elements that include command generating units respectively in a segment within the range of a first delay, for example, one clock cycle. This means that by using the second level command collecting matrix to collect commands in the command outputting unit from the collection command registers of a plurality of segments within the range of a predetermined delay, for example, one clock cycle, it is possible to collect commands into the command outputting unit with a predetermined latency (delay) from all of the processing elements that are included in the reconfigurable section and are equipped with command generating units respectively. This means that it is possible to control all of the processing elements included in the reconfigurable section in synchronization (i.e., with the same timing) using a command from the command generating unit that is sent via the command transmitting system with a predetermined or set latency.

Accordingly, it is possible to transmit a command generated by the command generating unit of a given processing element included in the reconfigurable section in synchronization to all of the processing elements included in the reconfigurable section. This means that it is possible to accurately control a data flow using a processing element included in the reconfigurable section. For example, even if a data flow has been configured using a large number of processing elements, it will still be possible to temporarily stop (halt) and reactivate (resume) the large number of processing elements that configure the data flow in synchronization using a command outputted from a processing element.

In this device, a command is transmitted via the command collecting system and the command transmitting system even to processing elements in the same segment to which the processing element that generated the command belongs. In addition, even the processing element that generated the command itself receives the command via the command collecting system and the command transmitting system. Accordingly, for all of the processing elements that belong to the reconfigurable section, the latency from the generation of a command in a processing element until the command is received in the processing element is uniform. This means that it is possible to transmit the command to all of the processing elements that belong to a data flow reconfigured across a plurality of segments included in the reconfigurable section in synchronization, and thereby prevent inconsistencies in the processing by the data flow.

The command outputting unit is equipped with a function as a command relay unit that transmits a command outputted from the at least part of the processing elements via the second level command transmitting matrix to the plurality of transmission command registers. By providing a register (flip-flop) in the command outputting unit, it is possible to set the latency with which a command is transmitted to the respective processing elements with even higher precision. The at least part of processing elements that are the sources of commands can output a command taking the clock cycles required for transmitting the command by the command collecting system and the command transmitting system into account to appropriately control the data flow. The command outputting unit may be included in an output interface element.

An input interface element that includes a storage unit for temporarily storing input data to the data flow configured in the reconfigurable section may be included in the group of processing elements that generate and output commands. A data storage-type element that includes a storage unit for temporarily storing intermediate data being processed by the data flow may be included in the group of processing elements that generate and output commands. This is because there are cases where the data to be inputted into the data flow will not be ready and where it is necessary to adjust the processing speed of an upstream data flow and the processing speed of a downstream data flow at a midpoint in a data flow.

The command generating unit included in an input interface element and/or a data storage-type element should preferably output a stop command when the amount of data remaining in the respective storage units has become equal to an amount of data consumed by the data flow that processes such data during the cycles (clock cycles, latency) consumed when transmitting the command using the command collecting system and the command transmitting system. When the input interface element or the data storage element provides data to the data flow, it is possible to temporarily stop the processing by such data flow to prevent inconsistencies from occurring and to then restart the processing by the data flow. When the final data is in the storage unit, the command generating unit should preferably be able to output the final data without outputting a stop command.

When a plurality of data flows are configured in the reconfigurable section, the plurality of processing elements included in the reconfigurable section should preferably each include a control unit that includes identification information that identifies the data flows to which the respective processing elements belong and for the command to include identification information. It is also possible to identify processing elements included in the plurality of data flows using the identification information, to stop only the data flows that should be stopped, and to allow other data flows to continue operating. It is also preferable for the identification information that identifies a data flow upstream from a processing element that includes a command generating unit to differ to the identification information that identifies a data flow downstream from the processing element. By controlling the operation of the data flow upstream from the processing element and the operation of the downstream data flow separately, it becomes possible to resolve the factors behind the generation of commands.

BRIEF DESCRIPTION OF THE DRAWINGS

FIG. 1 is a block diagram of a reconfigurable device.
FIG. 2 shows the arrangement of a PE matrix.
FIG. 3 shows the arrangement of segments of the PE matrix.
FIG. 4 shows an enlargement of the layout of the PE matrix.
FIG. 5 shows the arrangement of PE inside a segment.
FIG. 6 shows wiring inside a segment (intra-segment wiring).
FIG. 7 shows wiring between segments (inter-segment wiring).
FIG. 8 is a block diagram of an ALU element.
FIG. 9 is a block diagram of an LDB element.
FIG. 10 is a block diagram of an STB element.
FIG. 11 is a block diagram of a RAMD element.
FIG. 12 is a block diagram of a DLE element.
FIG. 13 is a block diagram of a command transmitting system and a command collecting system.
FIG. 14 is a block diagram of a control unit of a PE.
FIG. 15 shows bank switching of an LDB element.
FIG. 16 shows an example where a bubble is generated.
FIG. 17 shows an example where a data flow is stopped by a flow stop.
FIG. 18 shows a bank controller (command generating unit) of an LDB element.
FIG. 19 is a timing chart when a flow stop command is outputted.
FIG. 20 is a timing chart when a flow stop command is not outputted.
FIG. 21 is a timing chart of another example where a flow stop command is not outputted.

DETAIL DESCRIPTION

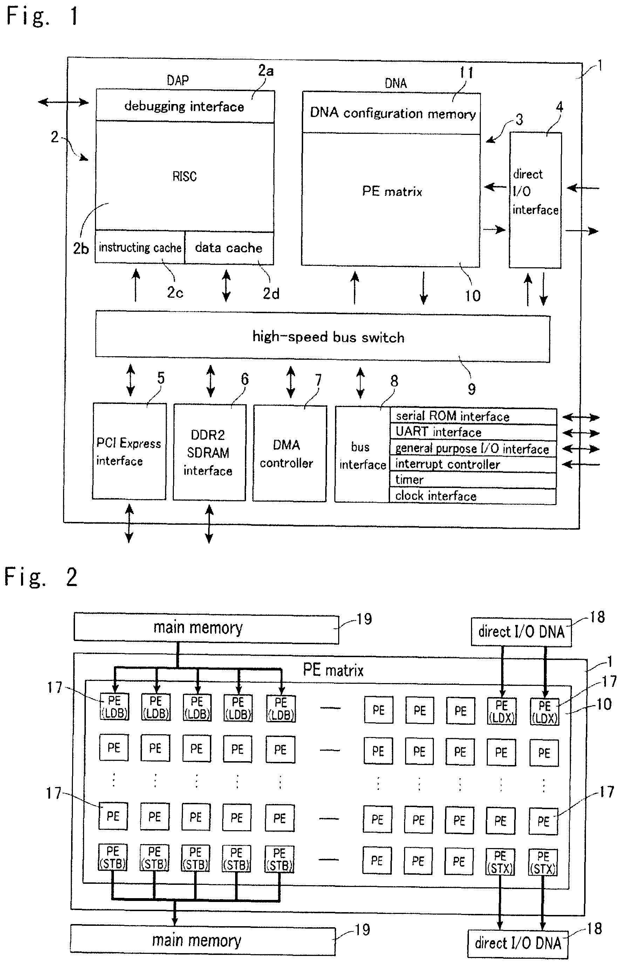

FIG. 1 shows one example of a reconfigurable device. This device 1 is a semiconductor integrated circuit device called a "DAPDNA" that was developed by the applicant of the present application. This device 1 includes a RISC core module 2 called a "DAP" and a Dynamic Reconfigurable Data-flow Accelerator 3 called a "DNA" (Distributed Network Architecture). In addition to the DAP 2 and the DNA 3, the device 1 includes an interface 4 for direct input and output into and out of the DNA 3, a PCI interface 5, an SDRAM interface 6, a DMA controller 7, another bus interface 8 and a high-speed bus switch 9 for connecting such components. The DAP 2 includes a debugging interface 2a, a RISC core 2b, an instruction cache 2c, and a data cache 2d. The device (system) 1 is capable of being provided as a single chip (an IC, LSI, or ASIC), but alternatively may be provided as a chipset that includes a plurality of chips.

The DNA 3 includes a PE matrix (or simply "matrix") 10 where 955 processing elements PE (hereinafter also referred to simply as "PE" or "PEs") are disposed in two dimensions and a configuration memory system 11 in which configuration data for reconfiguring the PE matrix 10 by changing the functions and/or the connections of the plurality of processing elements PE (PEs) included in the PE matrix 10 is stored. The configuration memory system 11 includes configuration register systems included in the control units of the respective PE and a transfer system that transfers configuration data to the register systems.

FIG. 2 shows an enlargement of the layout of the PE matrix 10. 955 PEs 17 are disposed in the horizontal and vertical directions in the PE matrix 10 so as to construct a matrix (a two-dimensional array construction), and form the core of a parallel processing processor. In hardware terms, the PE matrix 10 is constructed of the PEs 17 that are laid out in a two-dimensional array and buses (a wiring matrix) that connect such PEs 17. The respective PEs 17 are equipped with only fundamental functions such as an arithmetic unit and memory, and complex functions are realized by connecting the PEs 17 together via the buses. The functions of the respective PEs 17 and the connections of the buses can be changed by software, with such information being referred to as a "DNA configuration". To achieve various processing on the PE matrix 10, DNA configurations corresponding to such processing are generated and are set (mapped) in the PE matrix 10. A plurality of DNA configurations can be stored inside the PE matrix 10 and it is possible to dynamically change which DNA configuration is being used by the present processing. Such DNA configurations are described in more detail later.

As shown in FIG. 2, the fundamental operation of the processing in the PE matrix 10 is composed of processing data that has been fetched from an external main memory 19 or the like and sending the data back outside again. It is possible to input and output data into and from the external main memory 19 or the like via the SDRAM interface 6 or the like. The PE matrix 10 is provided with two types of port for fetching (inputting) data from the outside. One is a PE 17 called an "LDB" and fetches data from a main memory 19 connected to the device 1 via the SDRAM interface 6 or the like. The other is a PE 17 called an "LDX" which fetches direct data from another device 18 that is externally connected via the direct I/O interface 4. The data fetched from such PEs 17 is processed by a data flow (data path) or data flows constructed by a plurality of PE 17 inside the PE matrix 10 and then outputted. Two types of port are also provided for sending data on which processing has been completed to the outside. One is a PE 17 called an "STB" and writes data into the external memory 19. The other is a PE 17 called an "STX" and sends direct data to an external device 18 that is connected via the direct I/O interface 4.

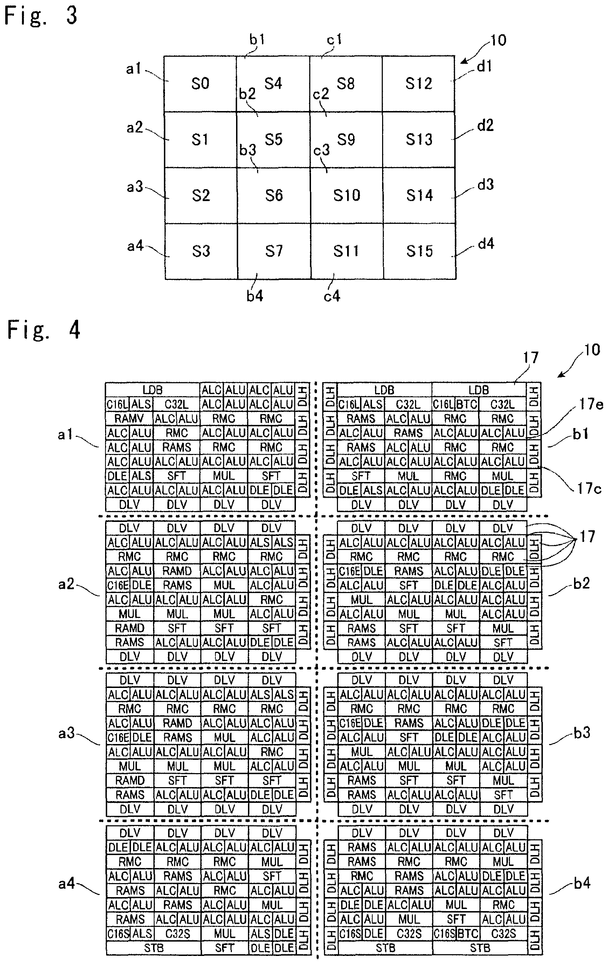

FIGS. 3 to 5 show the arrangement of the PE matrix 10 in even more detail. The plurality of PEs 17 disposed in the PE matrix 10 include PE ("ePE") that mainly perform a variety of processing on data and connecting PE ("DLV" and "DLH") that mainly form connections between PEs. As shown in FIG. 3, the plurality of PEs 17 disposed in the PE matrix 10 are divided or partitioned in sixteen segments that construct four columns and four rows (hereinafter, "segment S" is used to designate the segments in general and "segments S0 to S15" or "segments a1 to a4", "b1 to b4", "c1 to c4", and "d1 to d4" are used to designate individual segments). The respective segments S include data processing PEs (ePEs) that construct eight columns and eight rows and DLVs and DLHs that are disposed along the boundaries with other segments S. The PEs 17 included in the respective segments S are connected by the intra-segment connections (connections inside the segment, a first level routing matrix) 21 that is capable of sending and receiving data within a range of a one-cycle delay. Also, adjacent segments S are connected by inter-segment connections (connections between the segments, a second level routing matrix) 22 via the DLVs and DLHs. Note that in the following description, when designating the PE 17 of the respective types, type names such as "LDB" and "LDX" are used.

The respective segments have different layouts of PEs. For example, LDB or LDX is disposed in the segments a1 to d1, and STB or STX is disposed in the segments a4 to d4. The fundamental flow of signals in the data flows (data paths) configured in the PE matrix 10 is from the segments a1, b1, c1, d1 to the segments a4, b4, c4, d4.

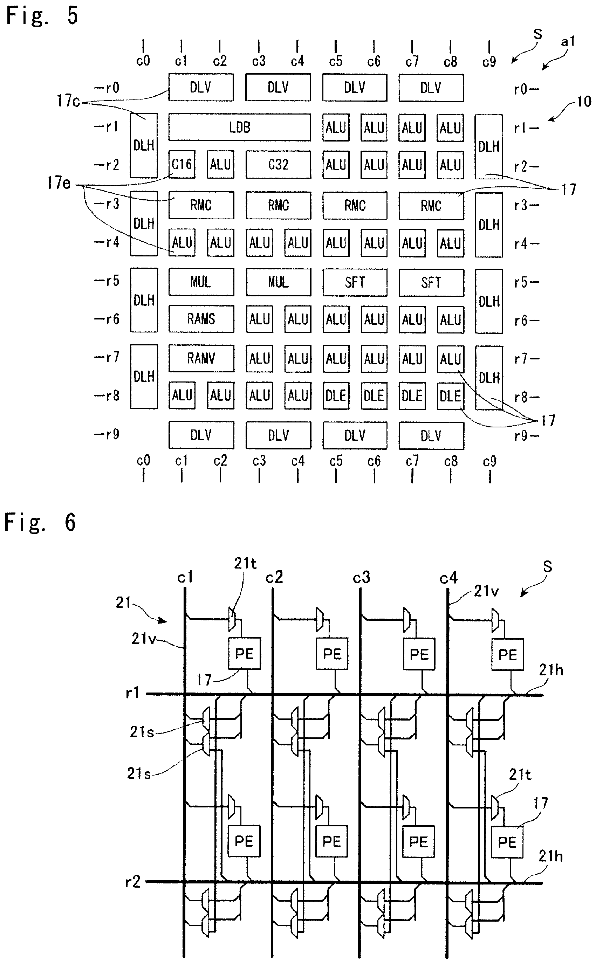

FIG. 4 shows one example of the layout of the PEs 17 in the segments a1 to a4 and b1 to b4. FIG. 5 shows an enlargement of the layout of the segment a1. The arrangements of data processing PEs 17e inside the respective segments are fundamentally eight columns and eight rows. That is, when the upper left PE of the segment is numbered as column c0, row r0 and the PE that is bottom right as column c9, row r9, the data processing PEs 17e are disposed in the range of columns c1 to c8 and rows r1 to r8. When DLH and DLV are not counted, the PE 17e that is closest to upper left is disposed at column c1, row r1. However, a PE 17e that has two data outputs such as "MUL", "SFT", or "RMC", and "RAM" are placed using two columns, that is, such PE has an area equal to two of the smallest PE 17. "STB" and "LDB" are laid out using four columns, that is, such PE has an area equal to four of the smallest PE 17.

DLV and DLH that are data transferring PE 17c are laid out to columns c0 and c9 and rows r0 and r9. Note that DLV and DLH are not placed in the four corners of each segment. In addition, as shown in FIG. 4, in segments that are located at the top, bottom, left, and right edges, there is no DLV in the top or bottom row or no DLH in the leftmost or rightmost column. That is, in the segments a1, a4, d1, and d4 located in the four corners, there is no DLV in one of the top and bottom rows (i.e., r0 or r9) and there is no DLH in one of the leftmost and rightmost columns (i.e., c0 or c9). In segments b1, c1 there is no DLV in the top row r0. In segments b4, c4, there is no DLV in the bottom row r9. In segments a2, a3, there is no DLH in the leftmost column c0 and in segments d2, d3, there is no DLH in the rightmost column c9.

FIG. 6 shows intra-segment connections (first level buses, a first level routing matrix) 21. The first level buses 21 include horizontal (i.e., width direction) buses 21h and vertical (i.e., height direction) buses 21v that connect the PEs inside the segments and switches ("selectors", "bus selectors", " H-to-V selectors") 21s for connecting the buses 21h and 21v.

FIG. 6 shows an extracted area of four columns and two rows inside a segment, for example, the columns c1 to c4 and the rows r1 and r2. The horizontal buses 21h are buses for connecting the outputs of the respective PEs 17 disposed in the same row and the outputs of the DLHs of the segment that are located on the left and on the right. The vertical buses 21v are buses for connecting the outputs of the respective selectors 21s disposed in the same column and the outputs of the DLVs of the segment that are located above and below. The selectors 21s are disposed at the intersections between the vertical buses 21v and the horizontal buses 21h, and as shown in FIG. 6 are constructed so that an odd-numbered row and an even numbered row in the same column (i.e., the rows 2N-1 and 2N) form a pair. The selectors 21s in the corners output two outputs from the respective rows (i.e., the horizontal buses) 21h to a vertical bus 21v. The first level buses 21 also include selectors ("PE input selectors") 21t that correspond to the respective PEs 17 and connect the vertical buses 21v to the respective PEs 17.

Data can be transmitted and received within one cycle (one clock cycle) in the range that can be connected by the first level buses 21 that include the buses 21h and 21v, that is, between the PE in each segment (i.e., between an FF (flip-flop) or register of a connected source PE and an FF or register of a connected destination PE). Accordingly, in terms of the timing (latency) at which signals propagate, as one example, all of the PE included in the segment a1 are equivalent. This means that when configuring a circuit, within the same segment, there is no need to verify or study the timing in advance regardless of which PE have been selected and assigned functions. In terms of timing, place and route of a circuit can be done freely on a plurality of PEs in a given segment.

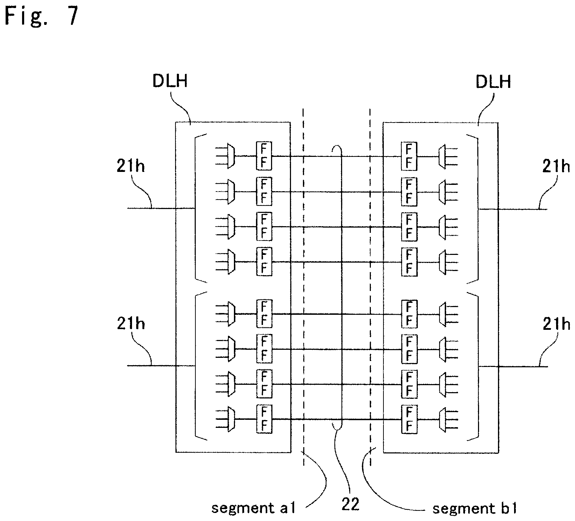

FIG. 7 shows the construction of the second level routing matrix 22. In FIG. 7, the DLHs (one type of connecting PEs 17c) that are respectively included in adjacent segments (segments a1 and b1 in FIG. 7) are connected by the second level routing matrix 22. The respective DLHs shown in FIG. 7 are connected to the first level routing matrices (intra-segment interconnects) 21 inside the segments S1 and S4. Accordingly, the PE 17 included in the segment S1 and the PE 17 included in the segment S4 can be connected via the second level routing matrix (inter-segment interconnect) 22. The DLH that is a connecting delay element 17c functions as an interface for the buses included in the first level routing matrix 21. Accordingly, it is possible to use the buses included in the first level routing matrix 21 independently in each segment. On the other hand, when it is necessary to input and output data between segments, data is inputted and outputted via the FF (flip-flop, register) included in the connecting DLHs. This means that when a signal is transmitted between segments via the second level routing matrix 22, a delay of one cycle that is synchronized with the clock is newly added. The connecting of segments S disposed above and below is carried out in the same way via the DLVs that are also connecting PE17c.

When PEs 17 are connected using only the first level routing matrix 21, it is guaranteed that the delay time (delay, or latency) between the PEs 17 will be within the range of one clock cycle (a "first delay"). Accordingly, it is not necessary to verify timing closures. On the other hand, when PEs 17 are connected via the second level routing matrix 22, an extra delay of at least one clock cycle will be added. The delay time when connecting via the second level routing matrix 22 depends on the settings of the delay elements DLHs, which makes it possible to control the delay (delay time). For example, by controlling the delay of the DLH, it is possible to synchronize a signal that uses the second level routing matrix 22 twice and a signal that uses the second level routing matrix 22 once. This also applies when connecting segments S that are adjacent via the other connecting delay elements DLVs.

The DLH shown in FIG. 7 has a function that passes a signal on a horizontal bus (H bus) 21h of the PE matrix 10 to an adjacent segment. The respective DLHs have 24 inputs and 8 outputs. The 24 inputs include outputs from the PEs 17 of the odd-numbered and even-numbered rows that are paired (two times the eight outputs per row, making a total of 16) and two times the four outputs of the DLHs that are positioned on the opposite side inside the same segment (making a total of 8). The respective DLHs select eight outputs from the twenty-four inputs and output via the second level routing matrix 22 to the DLHs of the adjacent segments. The fundamental construction of the DLVs is the same.

Out of the PEs 17 disposed in the PE matrix 10 shown in FIGS. 4 and 5, the PEs 17 of the types indicated as "ALU", "ALC", "ALS", "MUL", "BTC", "RMC", and "SFT" have twenty types of arithmetic operations, logic operations, and a comparison function for two inputs. The data input/outputs are sixteen bit data and composed of two inputs and one output. The multiplier has an input of sixteen-bit data and an output of thirty-two-bit data. These PEs 17 are normally referred to as "ALU elements" and include respectively unique arithmetic functions. For example, ALU and ALC include the same arithmetic processing but differ as to whether a fixed value is internally stored. ALC stores a single 16-bit fixed value, but ALU uses the fixed value of the adjacent ALC instead of internally storing a fixed value. ALS internally stores one sixteen-bit fixed value and supports special processing such as FF1(Find the First 1), SN1 (Sum of Number of 1), S2P (Serial To Parallel), and P2S (Parallel To Serial). MUL internally includes a multiplier. BTC sets output data in bit units. To produce sixteen output bits, it is possible to select arbitrary single bits from input 32 bits as the individual output bits. RMC is a PE with two inputs and two outputs and carries out a bit rotate, mask processing, and a compare process. RMC also supplies a sixteen-bit fixed value. SFT carries out a 32-bit shift process.

The PE 17 of the type indicated as "DLE" is a delay element used to adjust latency and to hand over data between segments. The data inputs and outputs of DLE are composed of one input and one output. The expression "delay elements" includes DLE as the delay adjusting PE 17e and DLH and DLV that are special-purpose PE 17c for handing over data between segments.

The PEs 17 of the type indicated as "RAM" are internal memory of the DNA matrix 10. Each RAM includes fifty-four 8Kbyte regions and one 16Kbyte regions, making in total a 448Kbyte memory region. This memory region stores values even when the DNA configuration is switched. The RAM elements include three types named "RAMS", "RAMD", and "RAMV".

The PE 17 of the types indicated as "C16L", "C16S", "C32L", "C32S", "C32E", and "C16E" are counter elements and are used as address generators for a DNA buffer, address generators for the main memory, and as general-purpose counters. C16L and C16S are address generators for a DNA buffer, are equipped with a counter function (two sixteen-bit counters), and are capable of generating a complex address pattern with an ALU element. C32L and C32S are address generators for the main memory, are equipped with a counter function (two 32-bit counters) and are capable of generating a complex address pattern with an ALU element. C32E and C16E are respectively 32-bit and 16-bit general-purpose counters.

The PE 17 of the type indicated as "LDB" are DNA load buffers that input data from the main memory 19 into the PE matrix 10 and correspond to input interface elements. Each LDB has a four-buffer construction, where one bank includes a buffer with a capacity of 8Kbytes. STB are DNA store buffers that output data from the PE matrix 10 to the main memory 19 and correspond to output interface elements. Each PE 17 of the type indicated as "STB" has a two-buffer construction, where one bank includes a buffer with a capacity of 8Kbytes. LDX input data from another DNA via direct I/O and output data to another DNA via direct I/O.

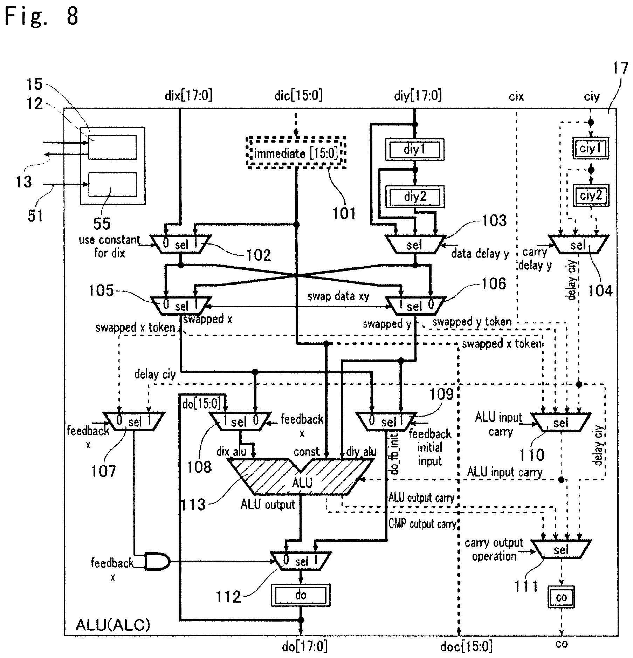

FIG. 8 is a block diagram of a PE 17 (hereinafter "ALU element") of the type indicated as "ALU". "dix" and "diy" are data inputs, and designate inputs selected by the selectors 21t from the vertical buses 21v. "do" is a data output and designates an output to a horizontal bus 21h. This also applies to other elements, "dic" is an input interface of the ALU element and designates an input from a fixed value (or "immediate") stored in the register of an ALC element that is an element with substantially the same functions. The ALC element has substantially the same construction as the ALU element aside from having a register 101 that is capable of storing a fixed value. "doc" is an output interface of the ALU element, "cix" and "ciy" are carry inputs and "co" is a carry output. The PE matrix 10 includes a carry bus with the same construction as the data bus shown in FIG. 6 and FIG. 7. In FIG. 8, the rectangles that are surrounded by double lines designate registers. This is also the same in the block diagrams of the respective PE 17 described below.

A selector 102 selects one of the data dix and a constant in a register 101 as an input X of an ALU 113. A selector 103 sets a delay of an input Y of the ALU 113. A selector 104 sets a delay of the carry of the input Y. Selectors 105 and 106 are provided to swap the inputs X and Y. A selector 107 sets feedback of the input X, and selects a token of the swapped input X or a carry of the input Y. A selector 108 selects the input X and is capable of feeding back the output of the ALU. A selector 109 is used to bypass the ALU 113. A selector 112 selects the output of the PE 17. A selector 110 selects a carry on the input side of the ALU 113 and selects one of a carry input (which includes a delay) and a token of input X or input Y (which may have been swapped). A selector 111 selects a carry outputted from the PE 17, and selects one of the input carry of the ALU 113, the output carry of the ALU 113, a carry when the ALU 113 has been used as a comparator, and a carry of the input Y.

In addition, the ALU element shown in FIG. 8 includes a control unit 15 for controlling the processing content (functions and connections) inside the element. The control unit 15 includes a configuration register system 12 that constructs the configuration memory system 11, and a command decode system 55. The control unit 15 switches and controls the functions of the ALU ele-

ment according to configuration data that has been transferred to the configuration register system 12 of the ALU element by a transfer system 13 and has become valid. For example, the control unit 15 sets the selectors included in the ALU element based on the valid configuration data to switch the function of an arithmetic logic element such as the ALU 113 and thereby have desired data processing carried out by the ALU element. Accordingly, it is possible to change the function of the ALU element in one clock cycle according to configuration data that has become valid in the register system 12. This also applies to the other PEs 17.

**[0045]** The command decode system 55 of the control unit 15 decodes a command transferred via a command transmitting matrix (a first level command transmitting matrix, command transfer matrix) 51 inside the segment. The command relates to valid configuration data in the configuration register 12 and if an EID included in the command matches the EID that is information for identifying a data flow, the ALU element will be controlled based on the command. As one example, for a stop command, the clock of the ALU element stops and all of the functions are stopped. This also applies to other PEs 17.

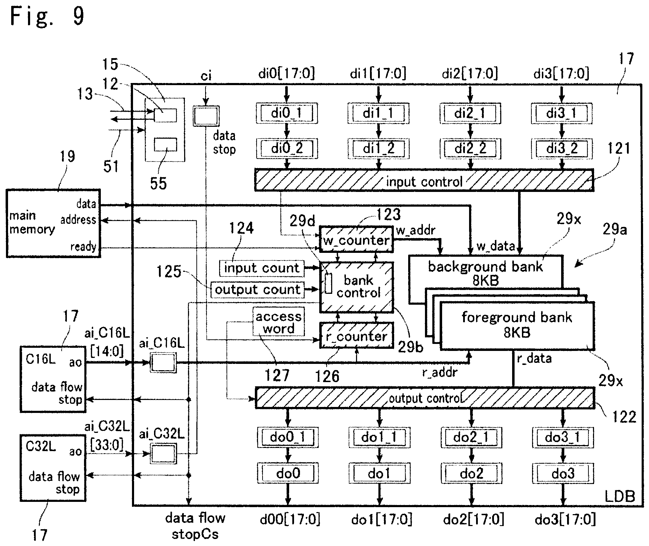

**[0046]** FIG. 9 is a block diagram showing a PE 17 (hereinafter, "LDB element") of a type indicated as "LDB". The LDB element is an input interface element including a data transfer buffer for transferring from the main memory 19 to the PE matrix (DNA matrix) 10. The LDB element includes a storage region 29a for temporarily storing input data into a data flow that has been reconfigured in the PE matrix 10. The storage region 29a includes four banks 29x of 8Kbytes each. One of the four banks 29x functions as a background bank (an input bank for input from the main memory 19) and another as a foreground bank (an output bank for output to the PE matrix 10).

**[0047]** The LDB element includes a bank control unit 29b. The bank control unit 29b has the four banks 29x operate independently and generates a bank switch in synchronization with the end of input and/or output of data so that the storage region 29a can be accessed from the PE 17 or data flow of the PE matrix 10 in each clock cycle. The storage region 29a equipped with the banks 29x provides data sequentially to a data flow that receives data from the LDB element.

**[0048]** Also, by generating an address at the C16L element, random access is possible from the DNA matrix 10 to the banks 29x of the storage region 29a. It is also possible to carry out a synchronization operation between a plurality of channels using the same EID (data flow identification information). Aside from being used as a transfer buffer for transfer from the main memory 19 to the DNA matrix 10, it is possible to use the LDB buffer as a buffer that writes internal data of the DNA matrix 10 using a loop back function.

**[0049]** The bank control unit 29b of the LDB element is equipped with a function as a command generating unit and includes a function (functional unit) that generates and outputs a flow stop signal. When it is desirable to stop a data flow (data path) that carries out processing on data outputted (read) from the LDB element, the bank control unit 29b of the LDB element generates and outputs a flow stop command (stop command, flow stop request) Cs that includes an EID showing the data flow reconfigured in the PE matrix 10 for such processing and a flow stop signal. By doing so, the LDB element is capable of stopping the desired data flow that reads out data via an output control unit 122.

**[0050]** When it is desirable to stop a data flow (data path) that carries out processing on data inputted (written) from the main memory 19 into the LDB element, the bank control unit 29b of the LDB element outputs a command Cs, which includes an EID showing the data flow for reading the external memory 19 that has been reconfigured in the PE matrix 10 for such processing, and a flow stop signal. By doing so, the LDB element is capable of stopping a desired data flow that inputs data via an input control unit 121. The LDB element is also equipped with a control unit 15 equipped with the same functions as in an ALU element.

**[0051]** Each LDB element includes, for reading and writing the storage region 29a and switches the banks 29x, a write counter 123, a read counter 126, an input count register 124 and an output count register 125 for storing thresholds, and a register 127 for storing access data units.

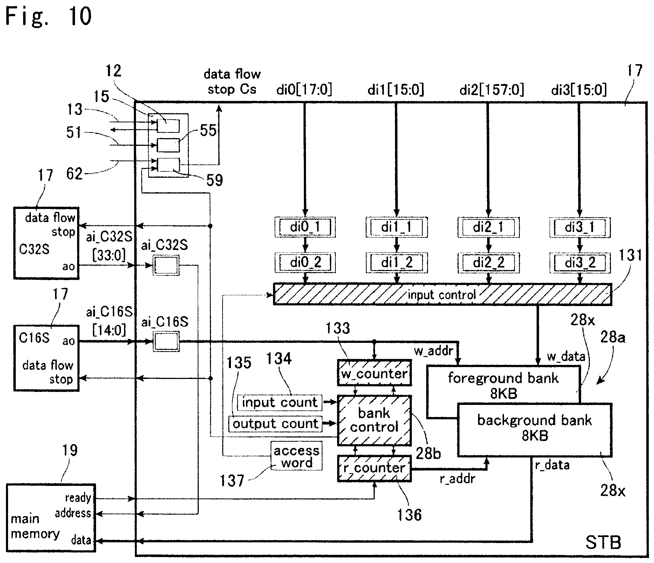

**[0052]** FIG. 10 is a block diagram of a PE 17 (hereinafter "STB element") of the type indicated as "STB". The STB element is an output interface element including a data transfer buffer for transferring data from the DNA matrix 10 to the main memory 19. Each STB element includes a storage region 28a for temporarily storing data outputted from a data flow. The storage region 28a includes two banks 28x that are respectively 8Kbytes in size. One of the two banks 28x functions as a background bank (a bank for outputting to the main memory 19) and the other functions as a foreground bank (a bank for inputting from the PE matrix 10).

**[0053]** The STB element includes a bank control unit 28b. The bank control unit 28b has the two banks 28x operate independently and generates a bank switch in synchronization with the end of input and/or output of data so that the storage region 28a can be accessed from the PE 17 or data flow of the DNA matrix 10 in each clock cycle.

**[0054]** The bank control unit 28b of the STB element is also equipped with a function (functional unit) as a command generating unit and includes a function that generates a flow stop signal. When it is desirable to stop a data flow (data path) that carries out processing on data outputted (read) from the STB element to the main memory 19, the bank control unit 28b generates and outputs a stop command Cs that includes the EID showing the data flow reconfigured in the PE matrix 10 for such processing. When an input control unit 131 is connected and it is desirable to stop a data flow (data path) that carries out processing that inputs (writes) data into the

STB element, the bank control unit 28b generates and outputs a stop command Cs including the EID indicating the data flow for such processing. Accordingly, in the same way as the LDB, the bank controller 28b is capable of stopping a desired data flow using a stop command Cs that includes a flow stop signal and an EID.

Each STB element also includes a control unit 15. The control unit 15 of the STB element includes a configuration register system 12, a command decode system 55, and a command outputting unit (command relay unit) 59. The command relay unit 59 calculates a logical OR for the stop command Cs generated inside the STB element and a stop command Cs generated inside the LDB or the like and outputs a combined stop command Cs to a command transferring matrix (a second level command transmitting matrix) 52 outside the segment.

The STB element also includes, for reading and writing the storage region 28a and switching the banks 28x, a write counter 133, a read counter 136, an input count register 134 and an output count register 135 for storing thresholds, and a register 137 for storing access data units.

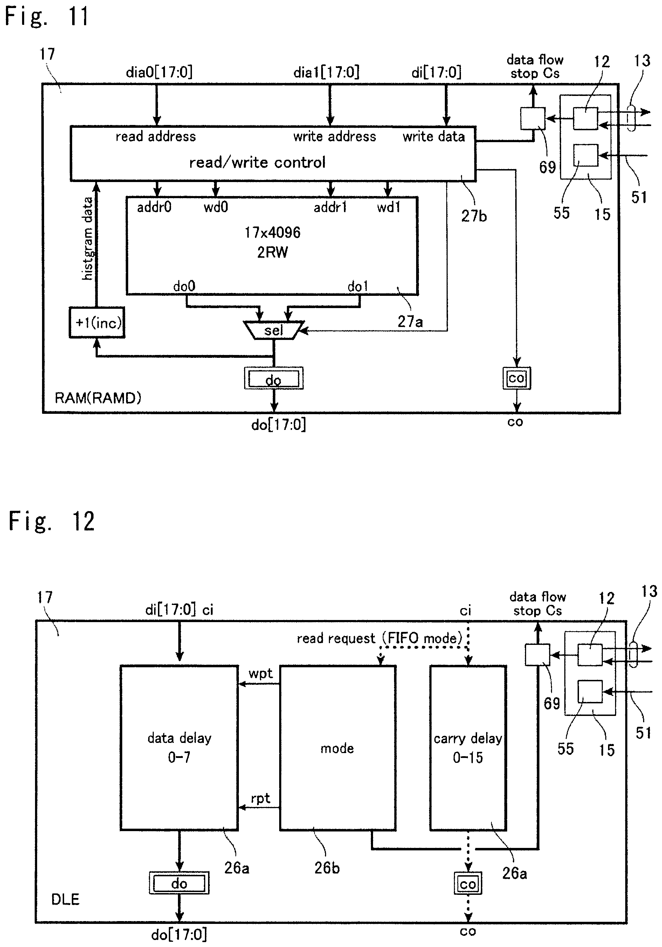

FIG. 11 is a block diagram showing a PE 17 (hereinafter, "RAM element") of the type indicated as "RAM". The RAM element shown in FIG. 11 is a RAMD element. The RAMD element is a dual port memory internally provided in the PE matrix 10. The RAMD element includes a dual port RAM 27a, a read/write controller 27b, and a control unit 15 that controls the functions of the RAMD element according to configuration data.

According to the configuration data, the RAMD element is capable of being used in address decode mode, in dual port 16-bit mode, histogram mode, 16-bit FIFO mode, and delay mode. This means that in a data flow, the RAM can be used as temporary data storage such as a line buffer or a FIFO, as a look-up table, for histogram processing, and the like. In addition, since the RAMD element is incorporated in a memory space of the RISC 2, it is possible for the RISC 2 to directly read and write the RAM 27a separately to the data flow configured in the PE matrix 10. When access by a data flow and direct access occur simultaneously, the direct access is given priority.

The RAMD element includes a command generating unit 69. The command generating unit 69 outputs a stop command Cs including a stop signal outputted from a read/write controller 27b and an EID included in the valid configuration data in the control unit 15. In FIFO mode and the like, when there is a large difference in speed between the processing speed of the data flow upstream and the processing speed of the data flow downstream, the command generating unit 69 of the RAMD element outputs a flow stop command Cs including the EID of the data flow upstream or the EID of the data flow downstream.

FIG. 12 is a block diagram showing a PE 17 (hereinafter "DLE element") of the type indicated as "DLE". A DLE element adjusts the delay value of data and a carry in a data flow reconfigured in the PE matrix 10. Each DLE element includes a delay circuit 26a, a mode control unit 26b for controlling the delay, and a control unit 15 for controlling the mode according to configuration data.

Each DLE element is capable of adjusting the delay of data in a range of one to eight clocks and of adjusting the delay of a carry in a range of one to sixteen clocks. In addition, the DLE element is equipped with a FIFO function. Accordingly, in the PE matrix 10, the DLE element is capable of being used to adjust timing between data and a carry, or as a buffer or the like for data.

The DLE element also includes a command generating unit 69. The command generating unit 69 outputs a stop command Cs including a stop signal outputted from the mode control unit 26b and an EID included in the valid configuration data in the control unit 15. In FIFO mode or the like, when there is a large difference in speed between the processing speed of an upstream data flow and the processing speed of a downstream data flow, the command generating unit 69 of the DLE element outputs a flow stop command Cs including the EID of the upstream data flow or the EID of the downstream data flow.

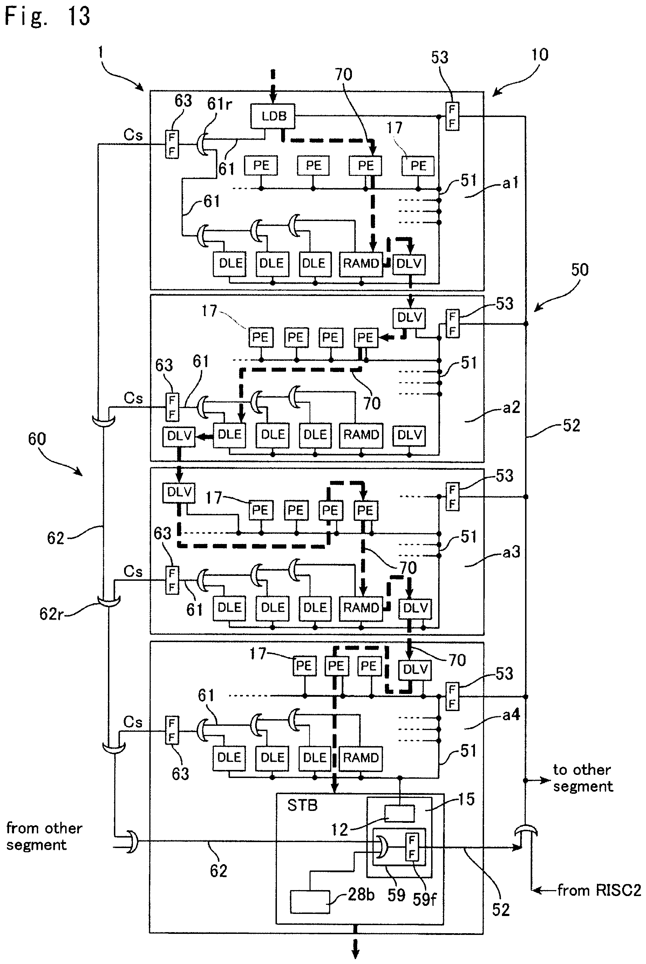

This device 1 further includes a command transmitting system 50 for transferring a command to each PE 17 and a command collecting system 60 for collecting commands generated by some of the PEs 17 and passing the commands to the command transmitting system 50. FIG. 13 shows an overview of the command transmitting system 50 and the command collecting system 60.

For ease of understanding, FIG. 13 shows segments a1 to a4 extracted out of the sixteen segments S of the PE matrix 10, but the other segments are also the same. The PEs 17 disposed in the PE matrix 10 and the routing matrices 21 and 22 configure the data flow (data path) 70 shown by the thick line. In this example data flow 70, data is inputted via the LDB of segment a1 and data is outputted via the STB of the segment a4. To configure the data flow 70, PEs 17 such as the ALU inside the segments are connected by the intra-segment connections 21 and the segments are connected via the DLV pairs by the inter-segment connections 22. The data flow 70 reconfigured in the PE matrix 10 is not limited to this and the number of reconfigured data flows 70 is not limited to one and in many cases a plurality of data flows will be reconfigured. LDB, STB, RAMD, and DLE are also one of PEs, but since these elements are PE 17 that act as generators (generation sources) of flow stop commands Cs, these elements have been shown separately in FIG. 13.

The command transmitting system 50 is a system for transmitting a stop command Cs and other commands to individual PE 17 in the plurality of PEs 17 included in the PE matrix 10. The command transmitting system 50 includes transmission command registers (registers, flip-flops, FF) 53 that are respectively provided in the segments a1 to a4 and the first level command transmitting matrix (command transmitting connections, command transmitting buses, command transmitting wiring) 51 for connecting the plurality of PE laid out in the segments a1 to a4 and the transmission command registers 53. The command transmitting system 50 further includes a second level command transmitting matrix 52 that connects the plurality of transmission command registers 53 provided in each segment and the command relay unit (command outputting unit) 59.

The command registers (register units) 53 are shown as "FF", and typically include a register composed of a multi-bit flip-flop FF or latch unit, but may also include other logic gates for transferring commands. The command registers 53 input and output the stop command Cs and other commands in a clock cycle unit or units and are used to transfer the commands in synchronization with clock cycles.

In the command transmitting system 50, a command register 59f of the command outputting unit 59 of the STB is connected to the transmission command registers 53 of the segments a1 to a4 by the second level command transmitting matrix 52. The second level command transmitting matrix 52 transmits (transfers) data (commands) to the transmission command registers 53 of the respective segments a1 to a4 from the command register 59f of the command outputting unit 59 of the STB within the range of one clock cycle.

In each of the segments a1 to a4, a transmission command register 53 is disposed in the segment and is connected to all of the PEs in the segment by the first level command transmitting matrix 51. In each of the segments a1 to a4, to all of the PEs 17 disposed in the same segment, data are transmitted (transferred) from a PE 17 inside the segment within the range of one clock. Accordingly, by using the first level command transmitting matrix 51, data (commands) are transmitted (transferred) to the PEs 17 in each segment within the range of one clock cycle from the command register 53 provided in the same segment.

That is, all of the PEs disposed in the segments a1 to a4 are controlled in the next clock cycle by a command latched in the command register 53 of each segment. Therefore, according to the command transmitting system 50, all of the PEs disposed in the PE matrix 10 are controlled by a command in synchronization in the second clock cycle after the command has been latched by the command register 59f of the command outputting unit 59 of the STB.

In the same way as described above, the command transmitting system 50 is capable of also transmitting other commands supplied from the RISC module 2 or the like to all of the PEs of the PE matrix 10 in synchronization.

The command collecting system 60 is a system for collecting the stop command Cs and other commands from PEs 17 that generate commands in the PE matrix 10. The command collecting system 60 includes collection command registers (registers, flip-flops, FF) 63 provided in the respective segments a1 to a4 to collect commands and first level command collecting matrices (command collecting connections, command collecting buses, command collecting wiring) 61 that connect PEs, out of the plurality of PE 17 disposed inside the respective segments a1 to a4, that generate commands and the command registers 63 used to collect the commands. In addition, the command collecting system 60 includes a second level command collecting matrix 62 for connecting the plurality of command registers 63 that are used to collect commands and are provided in the respective segments and the command relay unit (command outputting unit) 59.

Like the command registers 52 used to transmit commands, the command registers 63 used to collect commands may typically include a register composed of a multi-bit flip-flop FF or latch unit, but may also include other logic gates for transferring commands. The command registers 63 input and output the stop command Cs and other commands in a clock cycle unit or units and are used to transfer the commands in synchronization with clock cycles.

In the command collecting system 60, the command registers 63 used to collect commands are disposed in each segment and are connected to all of the PEs that generate commands inside such segments by the first level command collecting matrices 61. This means that in the segments a1 to a4, by using the first level command collecting matrix 61, it is possible to collect data (or stop commands) from all of the PEs that generate commands into the command register 63 provided in the same segment in the range of one clock cycle.

The command register 59f of the command outputting unit 59 of the STB and the command registers 63 used to collect commands in the segments a1 to a4 are connected by the second level command collecting matrix 62. The second level command collecting matrix 62 transmits (transfers) data (commands) from the command registers 63 used to collect commands in the segments a1 to a4 to the command register 59f of the command outputting unit 59 of the STB within the range of one clock cycle. Accordingly, commands are transmitted (transferred) in two clock cycles to the command register 59f of the command outputting unit 59 of the STB from all of the PEs 17 that generate commands and are disposed in the PE matrix 10.

In the device 1, a command is transmitted via the command collecting system 60 and the command transmitting system 50 even to PE 17 located in the segment to which the PE 17 that generated the command belongs. In addition, in the PE 17 that generates the command itself, to the control unit 15 that receives commands in that PE 17, the command is transmitted via the command collecting system 60 and the command transmitting system 50. Accordingly, all of the PEs 17 that belong to the PE matrix 10 have uniform latency from the issuance of a command by PEs 17 to the reception of that command by PEs 17. This means that it is possible to transmit commands with synchronized timing to all the PEs 17 that belong to a data flow reconfigured across a plurality of segments included in the PE matrix 10 and to prevent inconsistencies in the processing by the data flow 70.

The first matrices 61 and the second matrix 62 of the command collecting system 60 include OR gates 61r and 62r that generate logical ORs for the commands. The stop command Cs is a sixteen-bit signal (stop [15:0]) that includes EID information, where bit 0 indicates "EID=0". Accordingly, by outputting a logical OR for the stop command Cs, it is possible to stop a plurality of data flows corresponding to a plurality of EID at the same timing. For this reason, even when a plurality of data flows that are carrying out different data processing are configured in the PE matrix 10, by using the command collecting system 60 and the command transmitting system 50, it is possible to accurately and flexibly control the plurality of data flows 70 respectively.

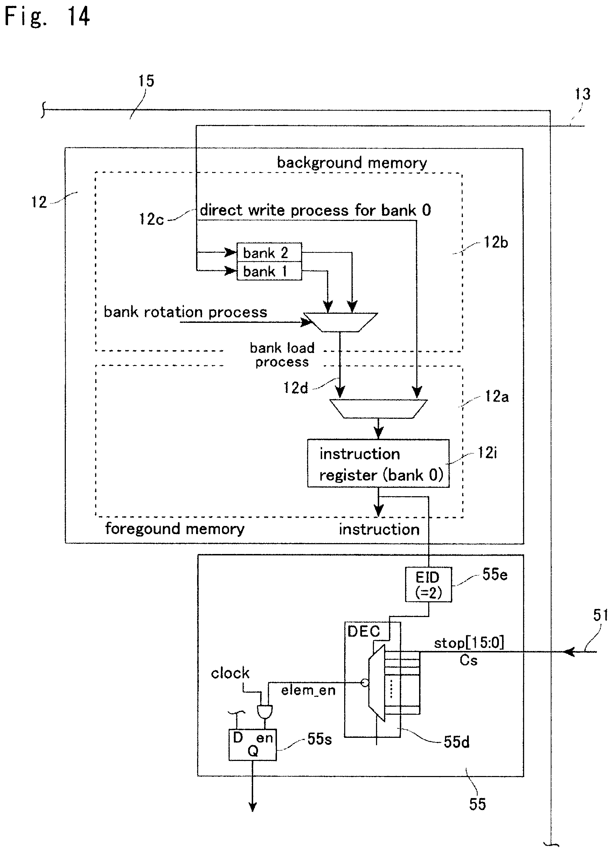

FIG. 14 is a block diagram of the control unit 15 included in each PE 17. FIG. 14 shows the configuration register system 12 and the command decode system 55 included in the control unit 15. The configuration register system (memory system) 12 includes a total of three banks of a configuration memory composed of two background memories 12b (i.e., two banks) and one foreground memory 12a (one bank). The three banks 12a and 12b are each capable of storing one DNA configuration. The register system 12 further includes a circuit 12c that stores a DNA configuration from the transfer system 13 in the foreground memory 12a and the background memory 12b respectively and a circuit 12d that transfers a DNA configuration stored in the background memory 12b to the foreground memory 12a.

In the register system 12 of the control unit 15, the function (state, data path) of each PE 17 is controlled by a DNA configuration that is present in the foreground memory 12a and has actually become valid. The valid DNA configuration can be switched by rewriting an instruction register 12i inside the foreground memory 12a. To write into the instruction register 12i, there is a method ("dynamic configuration") that transfers from a bank of the background memory 12b and a method that directly writes from a control register (DNACFGW) on the memory map. Transfer from the background memory 12b into the foreground memory 12a is possible in one clock and the functions of the PEs 17 can be switched in one clock.

Out of the two banks of the background memory 12b, it is possible to load a DNA configuration from the main memory into the bank that is no longer needed. This means that the number of DNA configurations is effectively unlimited. Switching the DNA configuration of the foreground memory 12a is called "dynamic reconfiguration" and two methods are provided. One method causes an interrupt to the DAP (RISC unit) 2 from the DNA configuration being executed and switches banks using the program of the DAP. The other method autonomously switches the DNA configuration being executed. This latter method is referred to in particular as "autonomous dynamic reconfiguration".

The DNA configuration (configuration data) includes circuit information, parameters, and the like for setting (switching, reconfiguring) the functions of the respective PEs 17. The configuration data additionally includes an EID (data flow identification information) that is information for identifying the data flow 70 in which the respective PEs 17 are included. An EID 55e of the valid DNA configuration being executed is referred to by the command decode system 55. The command decode system 55 includes an EID decoder 55d and a clock control unit 55s for switching the operation of the PE on and off. As described earlier, the stop command Cs includes a sixteen bit signal showing the EID. If an EID that matches the EID 55e of the DNA configuration that is presently valid is included in the stop command Cs, the command decode system 55 stops the clock to stop the operation of the PE 17. For example, when the EID 55e is "2", if bit 2 of the stop command Cs (i.e., the second bit of the data) is "1", the PE is stopped. If bit 0 and 2 of the stop command Cs are "1", it is possible to stop the operation of the PEs with the EID 55e "0" and "2" and simultaneously control a plurality of data flows.

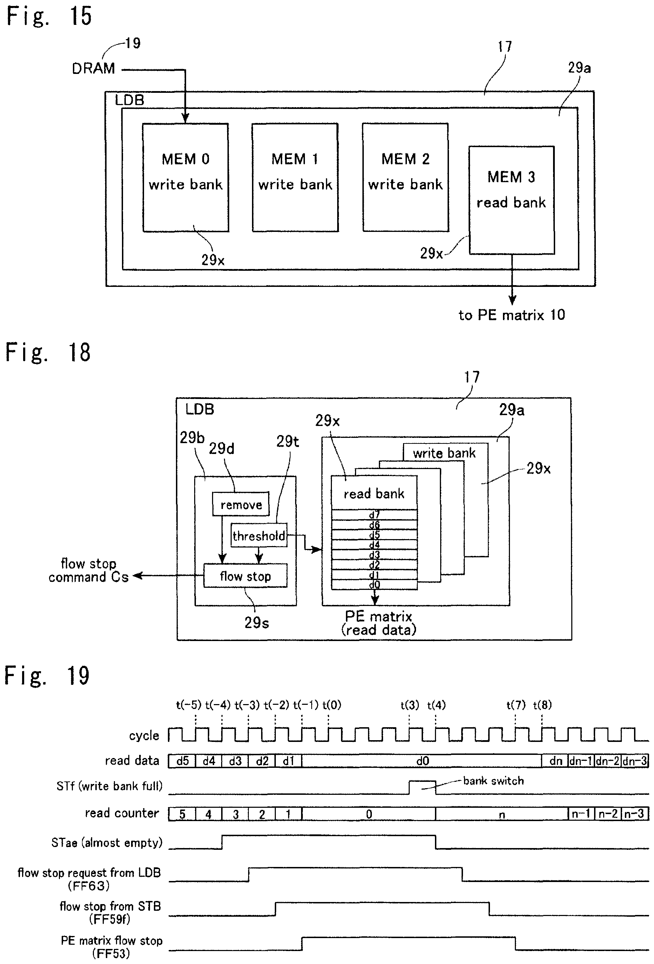

FIG. 15 shows how data is inputted from the main memory (DRAM) 19 into the PE matrix 10 using the four banks 29x included in the storage region 29a of the LDB (LDB element). The LDB of the device 1 includes the storage region 29a with a four-bank construction. By using this construction, it is possible to hide the read latency for the DRAM 19. In the LDB, a read out of data into the PE matrix 10 (the PEs 17 or data flow 70 of the matrix 10) ends and switching banks in the storage region 29a is performed, then a read request to the DRAM 19 is issued.

In recent years, there has been a remarkable increase in the speed of the DRAM 19, but the price for this has been an increase in access latency. That is, the number of clock cycles from the input of a read command to the reading of data has increased. This means that if a two-bank construction were used and the depth of the buffer were not enough (i.e., when the amount of data to be read out is small), the read request following a bank switching would cause end of the reading of the data from the read-side bank, that would stop input into the PE matrix 10, and the data flow 70 would end up idling. To avoid this situation, the number of banks in the device 1 is increased to four banks. By increasing the number of banks, the number of banks 29x on the write side becomes plural (in this example, three write banks). This means that it is possible to output a read request to the DRAM 19 without waiting for the read bank 29x to become empty and for a bank switch from the read bank to a write bank. Accordingly, it is possible to hide the access latency for the DRAM 19.

There are also cases where due to conflicting accesses to the DRAM 19 or other reasons, a standard amount of data is not loaded into the write-side bank 29x when the read-side bank 29x of the LDB has become free. At such times, it is not appropriate to carry out bank switching and it is desirable to stop the reading of data from the LDB or to invalidate the data read out after the read-side bank 29x has become free. In a data flow-type computer, there is a known technique that appends each data with a token to indicate whether the data is valid or invalid. Since a data flow may be controlled using tokens by transmitting tokens together with data, the hardware construction becomes simple. This system is also applied in the device 1. However, if control is carried out based on tokens alone, there is the possibility of data flows carrying out erroneous operations.

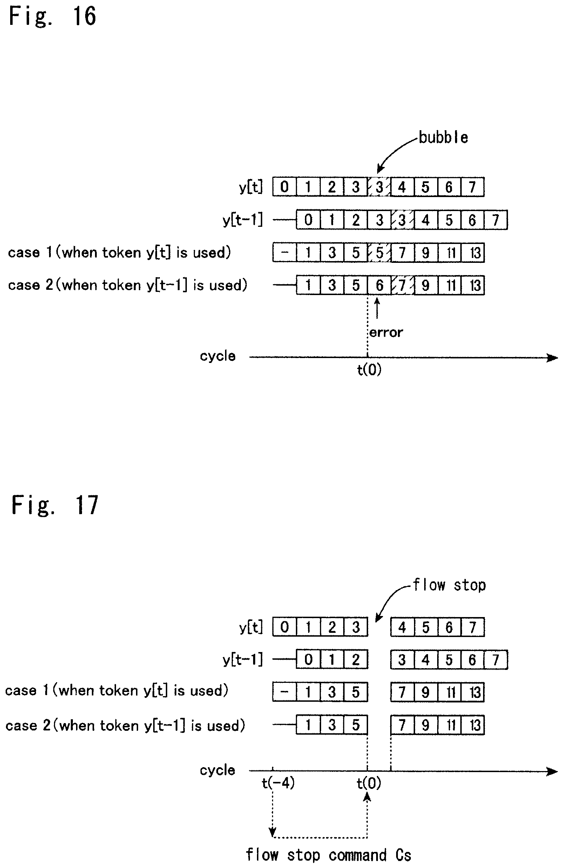

FIG. 16 shows one example. In a case where a data flow carries out the operation in equation (1) given below, if the read-side bank 29x becomes empty at cycle t(0) as shown in FIG. 16, the data inputted fifth will be invalid (called a "bubble"). In such situation, as shown in Case 1, when the operation is carried out based on the token of the data Y(t), the result produced by such invalid data will be processed as being invalid. On the other hand, as shown in Case 2, when an operation is carried out based on the token of Y(t-1), an error will occur for a result that has been produced by valid data. If a result is treated as being valid only when both the token of Y(t) and the token of Y(t-1) are valid, a valid operation result will be processed as being an invalid result. Accordingly, processing that selects a valid token depending on the operation included in a data flow is required, and this needs to be taken into account when designing the data flow.

$$Y(t)=Y(t)+Y(t-1) \quad \cdots (1)$$

FIG. 17 shows a state where the read-side bank 29x has become empty at cycle t(0) in the device 1. In the device 1, according to the command collecting system 60 and the command transmitting system 50, the flow stop command Cs generated in the PE 17 is latched in the registers 53 and the flow stop command Cs is transmitted to all of the PEs 17. However, three clock cycles are required from the generation of the flow stop command Cs to arrival, all of the PEs 17 refer to (i.e., are transmitted) such command Cs four clock cycles later, and all of the PEs 17 are controlled by the command Cs.

Accordingly, as shown in FIG. 17, the LDB outputs the command Cs at t(-4) that is the time four cycles before t(0) that is the time the read-side bank 29x will become empty. Using stop command Cs, it is possible to stop the data flow 70 and the LDB. Since the LDB stops when there is no data in the load buffer 29a, data with no token (i.e., a "bubble") will not be outputted. In addition, since the data flow with the corresponding EID also temporarily stops, processing will not be carried out based on invalid data. Accordingly, it is possible to provide a bubble-free environment, which means that the user does not need to be concerned about bubbles and can design a data flow and map the data flow onto the PE matrix without being concerned about the selection of tokens.

In addition, in the device 1, since the local clocks of the PEs having the EID will stop due to the flow stop command Cs, there is also a drop in power consumption. When control is carried out based on tokens alone, the data flow will not stop, and in many cases operations are also carried out on invalid data. This results in power being consumed more and also the possibility of memory or registers being unnecessarily overwritten by an invalid operation. However, in the device 1, since it is possible to stop the data flow using a flow stop command Cs generated from a PE, it is possible to avoid such undesirable situation from the outset.

When the number of data is predetermined, the bank control unit 29b and the command generating unit 69 that are the units that generate the flow stop command in an element such as the LDB and RAM may be further equipped with a function (functional unit) that removes or does not generate a flow stop in order to output the final data. This is because there is the possibility of a data flow becoming deadlocked due to the amount of remaining data in the storage region 29a that functions as a FIFO not increasing after the final data has been received. For this reason, the bank control unit 29b that is the command generating unit of the LDB is equipped with a function 29d that cancels or removes (i.e., stops) the outputting of a flow stop after an end token from the element C32L has been latched and read data of such address has returned (see FIG. 9). According to this function 29d, even the final data will be outputted to the data flow reconfigured in the PE matrix 10 without problems. As different example of canceling a flow stop, the C32L generate a cause of interrupt when finding an end token, the DPA 2 sets a special register to cancel the flow stop.

FIG. 18 shows the construction and timing for generating and outputting the flow stop command in the LDB element. Due to bank switching, a write bank 29x becomes the read bank 29x and the read bank 29x becomes a write bank 29x. After this, data is transmitted from the swapped read bank 29x to the PE matrix 10. When the amount of data that can be read out from the read bank 29x during data transmission falls below a predetermined threshold value 29t stored in the register 125, the bank controller 29b that is the command generating unit determines an almost empty state STae and a flow stop request function 29s of the bank controller 29b outputs the flow stop command Cs for carrying out a flow stop. The threshold 29t is decided based on the latency from the outputting of the command Cs by the flow stop request function 29s until the command Cs returns to the LDB and the segment.

More specifically, in the device 1, three clocks are required for the respective PEs 17 to refer to or get the flow stop command Cs (i.e., for the command Cs to arrive), and four clocks are required until the data flow 70 stops from command generation. Accordingly, the latency (delay) of the command Cs is four clock cycles, and the flow stop command may be outputted when the data remaining in the read bank 29x of the storage region 29a is four clock cycles' worth of data, that is, when an almost empty state STae will be determined when the data d4 has been outputted.

FIG. 19 is a timing chart up to the outputting of the flow stop command Cs and the stopping of the data flow. If the bank controller 29b detects the data d4 in cycle t(-4), the bank controller 29b determines the almost empty state STae. Since this LDB element belongs to the data flow 70 with the EID "2" (i.e., is providing data to a data flow) the bank controller 29b outputs a flow stop command Cs with the EID "2".

The flow stop command Cs (flow stop request) outputted by the bank controller 29b is latched (obtained) by the command register (FF) 63 of each segment of the command collecting system 60 via the first level command collecting matrix 61 in cycle t(-3). That is, the command Cs is collected by a register 63 of the command collecting system 60.

The command Cs collected in the register 63 of the command collecting system 60 is obtained by the output register (FF) 59f of the command outputting unit 59 of the STB via the second level command collecting matrix 62 in cycle t(-2). That is, the command Cs is collected in the register 59f.

The command Cs collected in the register 59f is obtained by the command register (FF) 53 in each segment of the command transmitting system 50 via the second level command transmitting matrix 52 in cycle t(-1). That is, the flow stop command Cs reaches the registers 53. This stop command Cs indicates that the next clock is invalid.

In the next cycle (0), the respective PEs 17 with the EID 2 recognize the command Cs in the command register 53 of each segment via the first level command transmitting matrix 51 and stop in accordance with the command Cs. Accordingly, in cycle t(0), the data flow 70 with the EID 2 stops.

The flow stop command Cs is held in the bank controller 29b of the source LDB element of the flow stop command Cs until a write bank 29x has reached a full state STf, bank switching has been completed, and the read bank 29x has been switched. In this case, the flow stop command Cs is removed in cycle t(4).

After this, the removal (cancel of invalid) of the flow stop command Cs is recognized by the PEs 17 via the command collecting system 60 and the command transmitting system 50 in the same way as described above. Accordingly, the flow stop command Cs with the EID 2 in the registers 53 is canceled in cycle t(7). This means that all of the PEs 17 that belong to the data flow with the EID 2 are freed from the stop in the next cycle t(8) and processing recommences or resumes from data d0.

In cycle t(8), the bank switching is completed, and data dn is supplied from LDB following the data d0. This means that the data flow 70 with the EID "2" is capable of continuing processing correctly without a bubble entering the data flow. Also, since it is possible to stop the clock for the PEs 17 belonging to the data flow with the EID 2 during the period from cycle t(0) to cycle t(8), it is possible to reduce power consumption. When processing that belongs to another EID and relates to data input or output or the like is being carried out, RAM elements and the like will not completely stop at such time, and there is the possibility of some power being consumed.

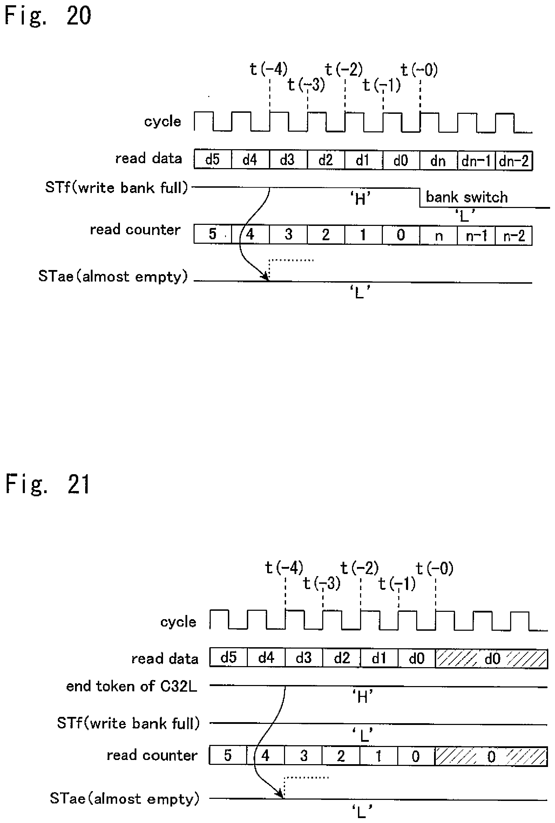

FIG. 20 shows a case where bank switching is carried out without outputting the flow stop command Cs. In the LDB element, even when the data of the read bank 29x is in an almost empty state STae, if the write bank 20x is already in a full state (a written state) STf, bank switching will be possible when the read bank 29x becomes empty. The bank controller 29b that functions as the command generating unit is equipped with the function 29d that cancels outputting of the flow stop, and the canceling function 29d acts. In response to the almost empty state STae at cycle t(-4), the canceling function 29d determines that a flow stop is unnecessary since the write bank 29x is full (written), and cancels the almost empty state STae. This means that a flow stop command Cs is not outputted. By doing so, it is possible to prevent the data flow from needlessly stopping.

FIG. 21 shows a case where the flow stop command Cs is not outputted for the final data. The canceling function 29d of the bank controller 29b operates even when the final data is in the read bank 29x. Accordingly, when the final data is in the read bank 29x, the flow stop command Cs is not outputted. If the final data is in the read bank 29x, data following the final data will not be read from the main memory (DRAM) 19. Accordingly, bank switching will not be carried out. This means that if the data flow 70 were stopped, the final data would not be read out. By not outputting the flow stop command Cs using the canceling function 29d, this type of situation can be prevented.

It is possible to determine whether the final data is in the read bank 29x according to a flag of an end token of the element C32L that outputs a read address of the DRAM 19. Since the end token flag is high (H), the canceling function 29d determines that a flow stop is unnecessary for the almost empty state STae at cycle t(-4), and cancels the almost empty state STae. For this reason, the flow stop command Cs is not outputted. By doing so, it is possible to prevent needless stopping of the data flow.

Although an example of a case where the flow stop command Cs is outputted by the LDB has been described above, it is also possible for DLE elements and RAM elements that include a function as a FIFO in the data flow to control an upstream and/or a downstream data flow in the same way. For example, in a DLE element or a RAM element set so as to function as a FIFO for an upstream data flow, a flow stop request with a number corresponding to its own EID or the EID of the upstream data flow will be outputted at timing when it appears that the FIFO will become full due to writing by the upstream data flow. According to this operation, it is possible to stop the upstream (write-side) data flow. By doing so, it is possible for the downstream data flow to carry out processing at convenient timing for the downstream data flow without having to consider the state of the upstream data flow.

The DLE element or RAM element also outputs a flow stop request (flow stop command) with the EID of the downstream data flow to the downstream data flow depending on the amount of data remaining in the FIFO. This makes it possible to prevent the supplying of bubbles to the downstream data flow from the outset. Also, as one example, it is possible to indicate whether a read is possible using the carry signal of the PE 17. If the carry is "1", this shows that there is data to be read out to the FIFO. By using this signal downstream, it is possible to carry out a read when circumstances are favorable.

By using this system, it is possible to generate the command Cs that includes a flow stop from a PE 17, to identify the data flows using EID, and to carry out control from the PE 17. The type of PE 17 that issues a command such as a flow stop is not limited to the examples described above. For example, when feedback processing is present in the processing of the data flow configured in the PE matrix, there are cases where it is desirable to carry out processing only once out of a plurality of iterations, for example, three iterations. For example, when the read side carries out processing only one out of three times to process feedback, it is conceivable that the same data would be read three times but processing would only appear to be carried out one out of three times. However, aside the RAM and DLE described earlier, by also outputting a flow stop command from a type of PE 17, such as an ALU, that is equipped with a data input and a determining function when processing is desired only one out of three iterations, it is possible to stop the data flow on the input side for two cycles. By carrying out this type of control, it is possible to reduce power consumption in the device 1.

In the device 1, it is possible to output a flow stop command from a PE 17 and control all of the PEs 17 in synchronization with the PE 17 regardless of the segments. Accordingly, it is possible to carry out control by dividing the data flows in units of identification information (EID). For example, it becomes possible to a read-side data flow to carry out a read when circumstances are favorable for the read side.

Segmentation is also effective when designing and mapping a data flow. Since timing closure is guaranteed within a segment, segmentation is suited to improving the freedom of place and route within segments. In addition, by carrying out segmentation, buses (routing matrixes) for transmitting and receiving signals can be used independently in each segment, thereby achieving the additional merit of improving the usage efficiency of the wiring. A (segmented) system or construction where a plurality of PE are laid out having been divided into a plurality of segments can also be introduced into a reconfigurable device that includes a plurality of uniform or nearly uniform PE or logic blocks (LCB) that include functions such as an ALU.

The routing matrices included in the present invention are not limited to routing matrices, such as electrical wiring, that transmit signals according to electrical/electronic methods. The routing matrices included in the present invention may be routing matrices that use other information transmission methods, such as optical transmission. Similarly, the layout of PEs and the layout of segments included in the present invention are not limited to regular arrangements in two dimensions, i.e., the vertical and horizontal. It is also possible to lay out a plurality of PEs and segments regularly in three or six directions, for example. In addition, it is possible to lay out PEs and segments in three dimensions using a method such as stacking in layers.

## Claims

1. A device (1) including a reconfigurable section that comprises a plurality of processing elements (17) that are laid out so as to be divided into a plurality of segments and a routing matrix for connecting the plurality of processing elements, a data flow being reconfigured in the reconfigurable section using at least some of the plurality of processing elements and at least part of the routing matrix, wherein the routing matrix comprises:

   a first level routing matrix (21) that connects processing elements included in each segment within a range of a first delay, the first delay being a one clock cycle; and
   a second level routing matrix (22) that connects processing elements included in different segments within a second delay that differs to the first delay, the second delay including an extra delay of at least one clock cycle in addition to the first delay,
   the device further includes a command transmitting system (50) that transmits commands to each processing elements included in the reconfigurable section, and
   the command transmitting system (50) comprises:

   a transmission command register (53) that is provided in each segment and shared with all the processing elements in each segment;
   a first level command transmitting matrix (51) that connects the transmission command register (53) and all the processing elements (17) in each segment within the first delay; and
a second level command transmitting matrix (52) that connects transmission command registers (53) of the plurality of segments and, with a delay that differs to the first delay, a command outputting unit (59) that outputs commands to transmit the commands to all the processing elements in each segment in synchronization with a predetermined latency via the second level command transmitting matrix (52), the transmission command register (53) and the first level command transmitting matrix (51),

wherein at least part of processing elements (17) out of the plurality of processing elements include: command generating units (69);
output interface elements, each output interface element including a storage unit that temporarily stores an output processed by a data flow configured in the reconfigurable section; and
input interface elements, each input interface element including a storage unit that temporarily stores input data to a data flow configured in the reconfigurable section, and
the device further includes:

a command collecting system (60) that collects commands generated by each command generating unit (69) into the command outputting unit,
wherein the command collecting system (60) includes:

a collection command register (63) that is provided in each segment;
a first level command collecting matrix (61) that connects the collection command register (63) and the at least part of processing elements in each segment within the first delay; and
a second level command collecting matrix (62) that connects the collection command registers (63) of the plurality of segments and the command outputting unit with a delay that differs to the first delay to have all the processing elements in each segment a uniform latency from issuance of a command to reception of that command,

wherein the commands transmitted by the command transmitting system (50) include a stop command that stops a clock of each processing element, and
wherein a command generating unit (69) included in each input interface element includes a function that is operable to output the stop command when an amount of data remaining in the storage unit has become equal to an amount of data consumed by the data flow during cycles consumed when a command is transmitted by the command collecting system (60) and the command transmitting system (50).

2. The device according to claim 1,
wherein a command generating unit (69) included in each input interface element includes a function operable when final data is in the storage unit to not output the stop command.

3. The device according to claim 1,
wherein the at least part of processing elements include data storage-type elements, each data storage-type element including a storage unit that temporarily stores intermediate data that is being processed by the data flow, and
a command generating unit (69) included in each data storage-type element includes a function that is operable to output the stop command when an amount of data remaining in the storage unit has become equal to an amount of data consumed by the data flow during cycles consumed when a command is transmitted by the command collecting system (60) and the command transmitting system (50).

4. The device according to claim 3,
wherein the command generating unit (69) included in each data storage-type element includes a function operable when final data is in the storage unit to not output the stop command.

5. The device according to any one of the preceding claims,
wherein the plurality of processing elements include processing elements that reconfigure the data flow by changing functions thereof.

6. The device according to any one of the preceding claims,
wherein the routing matrix includes a routing matrix that reconfigures the data flow by changing at least one connection thereof.

7. The device according to any one of the preceding claims,
wherein a plurality of data flows are reconfigured in the reconfigurable section, the plurality of processing elements included in the reconfigurable section include control units including identification information that identify a data flow to which respective processing elements belong, and the commands transmitted by the command transmitting system (50) include identification information.

8. The device according to claim 7,
wherein identification information that identifies an upstream data flow of a processing element that includes a command generating unit (69) differs to identification information that identifies a downstream data flow of the processing element.

9. The device according to any one of the preceding claims,
wherein the device further comprises a processor that generates a command that is transmitted via the second level command transmitting matrix (52) to control a data flow configured in the reconfigurable section.

**Patentansprüche**

1. Vorrichtung (1) aufweisend einen rekonfigurierbaren Abschnitt, mit einer Vielzahl an Verarbeitungselementen (17), die so angeordnet sind, dass sie in eine Vielzahl an Segmenten unterteilt sind, und eine Routingmatrix zum Verbinden der Vielzahl an Verarbeitungselementen, wobei ein Datenfluss in dem rekonfigurierbaren Abschnitt, unter Verwendung wenigstens einiger der Vielzahl an Verarbeitungselementen und wenigstens eines Teils der Routingmatrix, rekonfiguriert wird,
wobei die Routingmatrix aufweist: eine Routing-Matrix (21) der ersten Ebene, die in jedem Segment enthaltene Verarbeitungselemente innerhalb eines Bereichs einer ersten Verzögerung verbindet, wobei die erste Verzögerung ein Ein-Takt-Zyklus ist; und eine Routing-Matrix (22) der zweiten Ebene, welche Verarbeitungselemente, die in verschiedenen Segmenten enthalten sind, innerhalb einer zweiten Verzögerung , die sich von der ersten Verzögerung unterscheidet, verbindet, wobei die zweite Verzögerung zusätzlich zur ersten Verzögerung eine zusätzliche Verzögerung von mindestens einem Ein-Takt-Zyklus enthält, wobei die Vorrichtung ferner ein Befehlsübertragungssystem (50) enthält, welches Befehle an jedes Verarbeitungselement, das in dem rekonfigurierbaren Abschnitt enthalten ist, überträgt, und
das Befehlsübertragungssystem (50) aufweist:

ein Übertragungsbefehlsregister (53), das in jedem Segment vorgesehen ist und von allen Verarbeitungselementen in jedem Segment gemeinsam genutzt wird;
eine Befehlsübertragungsmatrix (51) der ersten Ebene, die das Übertragungsbefehlsregister (53) und alle Verarbeitungselemente (17) in jedem Segment innerhalb der ersten Verzögerung verbindet; und
eine Befehlsübertragungsmatrix (52) der zweiten Ebene, die Übertragungsbefehlsregister (53) aus der Vielzahl an Segmenten verbindet, und,
eine Befehlsausgabeeinheit (59), welche Befehle zur Übertragung der Befehle an alle Verarbeitungselemente in jedem Segment synchron mit einer vorbestimmten Latenz über die Befehlsübertragungsmatrix (52) der zweiten Ebene, das Übertragungsbefehlsregister (53) und die Befehlsübertragungsmatrix (51) der ersten Ebene mit einer Verzögerung, die sich von der ersten Verzögerung unterscheidet, ausgibt, wobei zumindest ein Teil der Verarbeitungselemente (17) aus der Vielzahl an Verarbeitungselementen aufweist:

Befehlserzeugungseinheiten (69);
Ausgabeschnittstellenelemente, wobei jedes Ausgabeschnittstellenelement eine Speichereinheit enthält, die vorübergehend eine Ausgabe speichert, welche durch einen Datenfluss verarbeitet wird, der in dem rekonfigurierbaren Abschnitt konfiguriert ist; und
Eingabeschnittstellenelemente, wobei jedes Eingabeschnittstellenelement eine Speichereinheit enthält, die Eingabedaten vorübergehend in einem Datenfluss speichert, der in dem rekonfigurierbaren Abschnitt konfiguriert wurde, und wobei

die Vorrichtung weiter aufweist:

ein Befehlssammelsystem (60), das von jeder befehlserzeugenden Einheit (69) erzeugte Befehle in die befehlsausgebende Einheit sammelt,
wobei das Befehlssammelsystem (60) aufweist:

ein Sammelbefehlsregister (63), das in jedem Segment vorgesehen ist;
eine Befehlssammelmatrix (61) der ersten Ebene, die das Sammelbefehlsregister (63) und den mindestens einen Teil der Verarbeitungselemente in jedem Segment innerhalb der ersten Verzögerung verbindet; und
eine Befehlssammelmatrix (62) der zweiten Ebene, die die Befehlssammelregister (63) aus der Vielzahl an Segmenten und die Befehlsausgabeeinheit mit einer Verzögerung verbindet, die sich von der ersten Verzögerung unterscheidet, damit alle Verarbeitungselemente in jedem Segment eine einheitliche Latenz von der Ausgabe eines Befehls bis zum Empfang dieses Befehls haben,

wobei die durch das Befehlsübertragungssystem (50) übertragenen Befehle einen Stoppbefehl enthalten, der einen Takt jedes Verarbeitungselements stoppt, und wobei eine Befehlserzeugungseinheit (69), die in jedem Eingabeschnittstellenelement enthalten ist, eine Funktion aufweist, die zum Ausgeben des Stoppbefehls geeignet ist, wenn eine in der Speichereinheit verbleibende Datenmenge, gleich einer Datenmenge geworden ist, die durch den Datenfluss verbraucht wird, verbraucht während Zyklen, wenn ein Befehl durch das Befehlssammelsystem (60) und das Befehlsübertragungssystem (50) übertragen wird.

2. Vorrichtung nach Anspruch 1,
wobei eine Befehlserzeugungseinheit (69), die in jedem Eingabeschnittstellenelement enthalten ist, eine Funktion aufweist, die, wenn sich endgültige Daten in der Speichereinheit befinden, geeignet ist, den Stoppbefehl nicht auszugeben.

3. Vorrichtung nach Anspruch 1,
wobei der zumindest eine Teil der Verarbeitungselemente Elemente vom Datenspeichertyp enthält, wobei jedes Element vom Datenspeichertyp eine Speichereinheit aufweist, die temporär Zwischendaten speichert, die durch den Datenfluss verarbeitet werden, und eine Befehlserzeugungseinheit (69), die in jedem Element vom Datenspeichertyp enthalten ist, und eine Funktion enthält, die geeignet ist, den Stoppbefehl auszugeben, wenn eine in der Speichereinheit verbleibende Datenmenge eine Datenmenge geworden ist, die während der Zyklen durch den Datenfluss verbraucht wird, und verbraucht wird, wenn ein Befehl durch das Befehlssammelsystem (60) und das Befehlsübertragungssystem (50) übertragen wird.

4. Vorrichtung nach Anspruch 3,
wobei die Befehlserzeugungseinheit (69), die in jedem Element vom Datenspeichertyp enthalten ist, eine Funktion enthält, die, wenn sich endgültige Daten in der Speichereinheit befinden, geeignet ist, den Stoppbefehl nicht auszugeben.

5. Vorrichtung nach einem der vorhergehenden Ansprüche,
wobei die Vielzahl an Verarbeitungselementen Verarbeitungselemente enthält, die den Datenfluss durch Änderung von Funktionen rekonfigurieren.

6. Vorrichtung nach einem der vorhergehenden Ansprüche,
wobei die Routingmatrix eine Routingmatrix enthält, die den Datenfluss rekonfiguriert, indem sie diesbezüglich mindestens eine Verbindung ändert.

7. Vorrichtung nach einem der vorhergehenden Ansprüche,
wobei eine Vielzahl von Datenflüssen in dem rekonfigurierbaren Abschnitt rekonfiguriert werden, wobei die Vielzahl an Verarbeitungselementen, die in dem rekonfigurierbaren Abschnitt enthalten sind, Steuereinheiten aufweisen mit Identifikationsinformationen, die einen Datenfluss identifizieren, zu dem jeweilige Verarbeitungselemente gehören, und die Befehle, die durch das Befehlsübertragungssystem (50) übertragen werden, Identifikationsinformationen beinhalten.

8. Vorrichtung nach Anspruch 7,
wobei sich Identifikationsinformationen, die einen stromaufwärtigen Datenfluss eines eine Befehlserzeugungseinheit (69) aufweisenden Verarbeitungselements identifizieren, von Identifikationsinformationen unterscheiden, die einen stromabwärtigen Datenfluss des Verarbeitungselements identifizieren.

9. Vorrichtung nach einem der vorhergehenden Ansprüche,
wobei die Vorrichtung ferner einen Prozessor umfasst, der einen Befehl generiert, welcher über die Befehlsübertragungsmatrix (52) der zweiten Ebene übertragen wird, um einen in dem rekonfigurierbaren Abschnitt konfigurierten Datenfluss zu steuern.

**Revendications**

1. Dispositif (1) comprenant une section reconfigurable qui comprend une pluralité d'éléments de traitement (17) qui sont disposés de manière à être divisés en une pluralité de segments et une matrice de routage pour connecter la pluralité d'éléments de traitement, un flux de données étant reconfiguré dans la section reconfigurable en utilisant au moins certains de la pluralité d'éléments de traitement et au moins une partie de la matrice de routage,
où la matrice de routage comprend :

une matrice de routage de premier niveau (21) qui connecte les éléments de traitement inclus dans chaque segment dans une plage d'un premier retard, le premier retard étant un cycle d'horloge ; et
une matrice de routage de deuxième niveau (22) qui connecte les éléments de traitement inclus dans différents segments dans un deuxième retard qui diffère du premier retard, le deuxième retard comprenant un retard supplémentaire d'au moins un cycle d'horloge en plus du premier retard,

le dispositif comprend en outre un système de transmission de commandes (50) qui transmet des commandes à chacun des éléments de traitement inclus dans la section reconfigurable, et le système de transmission de commandes (50) comprend :

un registre de commandes de transmission (53) qui est fourni dans chaque segment et partagé avec tous les éléments de traitement dans chaque segment ;
une matrice de transmission de commandes de premier niveau (51) qui connecte le registre de commandes de transmission (53) et tous les éléments de traitement (17) dans chaque segment dans le premier retard ; et
une matrice de transmission de commandes de deuxième niveau (52) qui connecte des registres de commandes de transmission (53) de la pluralité de segments et, avec un retard qui diffère du premier retard, une unité de sortie de commandes (59) qui délivre en sortie des commandes pour transmettre les commandes à tous les éléments de traitement dans chaque segment de manière synchronisée avec une latence prédéterminée par l'intermédiaire de la matrice de transmission de commandes de deuxième niveau (52), du registre de commandes de transmission (53) et de la matrice de transmission de commandes de premier niveau (51),

où au moins une partie des éléments de traitement (17) parmi la pluralité d'éléments de traitement comprend :

des unités de génération de commandes (69) ;
des éléments d'interface de sortie, chaque élément d'interface de sortie comprenant une unité de stockage qui stocke temporairement une sortie traitée par un flux de données configuré dans la section reconfigurable ; et
des éléments d'interface d'entrée, chaque élément d'interface d'entrée comprenant une unité de stockage qui stocke temporairement les données d'entrée dans un flux de données configuré dans la section reconfigurable, et

le dispositif comprend en outre :

un système de collecte de commandes (60) qui collecte les commandes générées par chaque unité de génération de commandes (69) dans l'unité de sortie de commandes, où le système de collecte de commandes (60) comprend :

un registre de commandes de collecte (63) qui est fourni dans chaque segment ;
une matrice de collecte de commandes de premier niveau (61) qui connecte le registre de commandes de collecte (63) et l'au moins une partie des éléments de traitement dans chaque segment dans le premier retard ; et
une matrice de collecte de commandes de deuxième niveau (62) qui connecte les registres de commande de collecte (63) de la pluralité de segments et l'unité de sortie de commande avec un retard différent du premier retard pour que tous les éléments de traitement dans chaque segment aient un temps de latence uniforme de l'émission d'une commande à la réception de cette commande,

où les commandes transmises par le système de transmission de commandes (50) comprennent une commande d'arrêt qui arrête une horloge de chaque élément de traitement, et
où une unité de génération de commandes (69) incluse dans chaque élément d'interface d'entrée comprend une fonction qui peut être utilisée pour délivrer en sortie la commande d'arrêt lorsqu'une quantité de données restant dans l'unité de stockage est devenue égale à une quantité de données consommée par le flux de données pendant les cycles consommés lorsqu'une commande est transmise par le système de collecte de commandes (60) et le système de transmission de commandes (50).

2. Dispositif selon la revendication 1,
dans lequel une unité de génération de commandes (69) incluse dans chaque élément d'interface d'entrée comprend une fonction qui peut être utilisée lorsque les données finales sont dans l'unité de stockage pour ne pas émettre la commande d'arrêt.

3. Dispositif selon la revendication 1,
dans lequel l'au moins une partie des éléments de traitement comprend des éléments de type stockage de données, chaque élément de type stockage de données comprenant une unité de stockage qui stocke temporairement des données intermédiaires qui sont traitées par le flux de données, et
une unité de génération de commandes (69) incluse dans chaque élément de type stockage de données comprend une fonction qui peut être utilisée pour émettre la commande d'arrêt lorsqu'une quantité de données restant dans l'unité de stockage est devenue égale à une quantité de données consommée par le flux de données pendant les cycles consommés lorsqu'une commande est transmise par le système de collecte de commandes (60) et le système de transmission de commandes (50).

4. Dispositif selon la revendication 3,
dans lequel l'unité de génération de commandes (69) incluse dans chaque élément de type stockage de données comprend une fonction qui peut être utilisée lorsque les données finales sont dans l'unité de stockage pour ne pas émettre la commande d'arrêt.

5. Dispositif selon l'une quelconque des revendications précédentes,
dans lequel la pluralité d'éléments de traitement comprend des éléments de traitement qui reconfigurent le flux de données en changeant ses fonctions.

6. Dispositif selon l'une quelconque des revendications précédentes,
dans lequel la matrice de routage comprend une matrice de routage qui reconfigure le flux de données en changeant au moins une de ses connexions.

7. Dispositif selon l'une quelconque des revendications précédentes,
dans lequel une pluralité de flux de données sont reconfigurés dans la section reconfigurable, la pluralité d'éléments de traitement inclus dans la section reconfigurable comprend des unités de contrôle incluant des informations d'identification qui identifient un flux de données auquel appartiennent des éléments de traitement respectifs, et les commandes transmises par le système de transmission de commandes (50) comprennent des informations d'identification.

8. Dispositif selon la revendication 7,
dans lequel les informations d'identification qui identifient un flux de données amont d'un élément de traitement qui comprend une unité de génération de commandes (69) diffèrent des informations d'identification qui identifient un flux de données aval de l'élément de traitement.

9. Dispositif selon l'une quelconque des revendications précédentes,
dans lequel le dispositif comprend en outre un processeur qui génère une commande qui est transmise par l'intermédiaire de la matrice de transmission de commandes de deuxième niveau (52) pour contrôler un flux de données configuré dans la section reconfigurable.

Fig. 1

DAP
2a
debugging interface
2
RISC
2b
instructing cache | data cache
2c        2d

DNA
11
DNA configuration memory
3
PE matrix
10

4
direct I/O interface

high-speed bus switch
9

5                6                7                8

PCI Express interface

DDR2 SDRAM interface

DMA controller

bus interface
| serial ROM interface |
| UART interface |
| general purpose I/O interface |
| interrupt controller |
| timer |
| clock interface |

Fig. 2

main memory — 19

direct I/O DNA — 18

PE matrix
1
17

| PE (LDB) | PE (LDB) | PE (LDB) | PE (LDB) | PE (LDB) | — | PE | PE | PE | PE (LDX) | PE (LDX) |
| PE | PE | PE | PE | PE | — | PE | PE | PE | PE | PE |
| PE | PE | PE | PE | PE | — | PE | PE | PE | PE | PE |
| PE (STB) | PE (STB) | PE (STB) | PE (STB) | PE (STB) | — | PE | PE | PE | PE (STX) | PE (STX) |

17
10
17

main memory — 19

direct I/O DNA — 18

# Fig. 3

|  | b1 | c1 |  | 10 |
|---|---|---|---|---|
| a1 | S0 | b2 S4 | c2 S8 | S12 — d1 |
| a2 | S1 | b3 S5 | c3 S9 | S13 — d2 |
| a3 | S2 | S6 | S10 | S14 — d3 |
| a4 | S3 | S7 | S11 | S15 — d4 |
|  | b4 | c4 |  |  |

# Fig. 4

17 / 10

**a1 / b1 block (17e, 17c):**

| LDB | | ALC | ALU | ALC | ALU | DLH | DLH | LDB | | | LDB | | DLH |
|---|---|---|---|---|---|---|---|---|---|---|---|---|---|
| C16L | ALS | C32L | | ALC | ALU | ALC | ALU | DLD | C16L | ALS | C32L | C16L | BTC | C32L | DLD |
| RAMV | ALC | ALU | RMC | | RMC | | DLH | RAMS | ALC | ALU | RMC | RMC | DLH |
| ALC | ALU | RMC | ALC | ALU | ALC | ALU | DLD | ALC | ALU | RAMS | ALC | ALU | ALC | ALU | DLD |
| ALC | ALU | RAMS | RMC | | RMC | | DLH | RAMS | ALC | ALU | RMC | RMC | DLH |
| ALC | ALU | ALC | ALU | ALC | ALU | ALC | ALU | DLD | ALC | ALU | ALC | ALU | ALC | ALU | ALC | ALU | DLD |
| DLE | ALS | SFT | MUL | SFT | DLH | SFT | MUL | RMC | MUL | DLH |
| ALC | ALU | ALC | ALU | ALC | ALU | DLE | DLE | DLD | DLE | ALS | ALC | ALU | ALC | ALU | DLE | DLE | DLD |
| DLV | DLV | DLV | DLV | | DLV | DLV | DLV | DLV |

**a2 / b2 block (17):**

| DLV | DLV | DLV | DLV | | DLV | DLV | DLV | DLV |
| ALC | ALU | ALC | ALU | ALC | ALU | ALS | ALS | DLH | ALC | ALU | ALC | ALU | ALC | ALU | ALC | ALU | DLH |
| RMC | RMC | RMC | RMC | DLD | RMC | RMC | RMC | RMC | DLD |
| ALC | ALU | RAMD | ALC | ALU | ALC | ALU | DLH | C16E | DLE | RAMS | ALC | ALU | DLE | DLE | DLH |
| C16E | DLE | RAMS | MUL | ALC | ALU | DLD | ALC | ALU | SFT | DLE | DLE | ALC | ALU | DLD |
| ALC | ALU | ALC | ALU | ALC | ALU | RMC | DLH | MUL | ALC | ALU | ALC | ALU | ALC | ALU | DLH |
| MUL | MUL | MUL | ALC | ALU | DLD | ALC | ALU | MUL | MUL | ALC | ALU | DLD |
| RAMD | SFT | SFT | SFT | DLH | RAMS | SFT | SFT | MUL | DLH |
| RAMS | ALC | ALU | ALC | ALU | DLE | DLE | DLD | RAMS | ALC | ALU | ALC | ALU | SFT | DLD |
| DLV | DLV | DLV | DLV | | DLV | DLV | DLV | DLV |

**a3 / b3 block:**

| DLV | DLV | DLV | DLV | | DLV | DLV | DLV | DLV |
| ALC | ALU | ALC | ALU | ALC | ALU | ALS | ALS | DLH | ALC | ALU | ALC | ALU | ALC | ALU | ALC | ALU | DLH |
| RMC | RMC | RMC | RMC | DLD | RMC | RMC | RMC | RMC | DLD |
| ALC | ALU | RAMD | ALC | ALU | ALC | ALU | DLH | C16E | DLE | RAMS | ALC | ALU | DLE | DLE | DLH |
| C16E | DLE | RAMS | MUL | ALC | ALU | DLD | ALC | ALU | SFT | DLE | DLE | ALC | ALU | DLD |
| ALC | ALU | ALC | ALU | ALC | ALU | RMC | DLH | MUL | ALC | ALU | ALC | ALU | ALC | ALU | DLH |
| MUL | MUL | MUL | ALC | ALU | DLD | ALC | ALU | MUL | MUL | ALC | ALU | DLD |
| RAMD | SFT | SFT | SFT | DLH | RAMS | SFT | SFT | MUL | DLH |
| RAMS | ALC | ALU | ALC | ALU | DLE | DLE | DLD | RAMS | ALC | ALU | ALC | ALU | SFT | DLD |
| DLV | DLV | DLV | DLV | | DLV | DLV | DLV | DLV |

**a4 / b4 block:**

| DLV | DLV | DLV | DLV | | DLV | DLV | DLV | DLV |
| DLE | DLE | ALC | ALU | ALC | ALU | ALC | ALU | DLH | RAMS | ALC | ALU | ALC | ALU | ALC | ALU | DLH |
| RMC | RMC | RMC | MUL | DLD | RAMS | RMC | RMC | MUL | DLD |
| ALC | ALU | RAMS | ALC | ALU | SFT | DLH | RMC | RAMS | ALC | ALU | DLE | DLE | DLH |
| RAMS | ALC | ALU | RMC | ALC | ALU | DLD | ALC | ALU | RAMS | ALC | ALU | ALC | ALU | DLD |
| ALC | ALU | RAMS | ALC | ALU | MUL | DLH | DLE | DLE | ALC | ALU | MUL | RMC | DLH |
| RAMS | ALC | ALU | ALC | ALU | ALC | ALU | DLD | ALC | ALU | MUL | SFT | ALC | ALU | DLD |
| C16S | ALS | C32S | MUL | ALS | DLE | DLH | C16S | DLE | C32S | C16S | BTC | C32S | DLH |
| STB | SFT | DLE | DLE | DLD | STB | | STB | | DLD |

## Fig. 5

## Fig. 6

Fig. 7

segment a1 · 22 — segment b1

Fig. 8

# Fig. 9

Fig. 10

# Fig. 11

# Fig. 12

Fig. 13

# Fig. 14

EP 2 246 781 B1

Fig. 15

-19

DRAM ──

LDB

MEM 0
write bank

MEM 1
write bank

MEM 2
write bank

MEM 3
read bank

29x                          29x

to PE matrix 10

Fig. 18

LDB

29b  29d      29t

remove

threshold

flow stop
command Cs ◄── flow stop

29s

read bank
d7
d6
d5
d4
d3
d2
d1
d0

write bank

29x

29x

29a

PE matrix
(read data)

Fig. 19

| | t(-5) t(-4) t(-3) t(-2) t(-1) t(0) | t(3) t(4) | t(7) t(8) |

cycle

read data | d5 | d4 | d3 | d2 | d1 | d0 | dn |dn-1|dn-2|dn-3|

STf (write bank full) ──── bank switch

read counter | 5 | 4 | 3 | 2 | 1 | 0 | n | n-1|n-2|n-3|

STae (almost empty)

flow stop request from LDB
(FF63)

flow stop from STB
(FF59f)

PE matrix flow stop
(FF53)

30

Fig. 16

Fig. 17

Fig. 20

Fig. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003023602 A

- US 5742180 A

**Non-patent literature cited in the description**

- The XPP White Paper. *Pact Informationstechnologie GmbH,* 27 March 2002